(19) Europäisches Patentamt

European Patent Office

Office européen des brevets

(11) **EP 1 146 328 B1**

(12) **EUROPEAN PATENT SPECIFICATION**

(45) Date of publication and mention
of the grant of the patent:
**02.11.2005 Bulletin 2005/44**

(51) Int Cl.⁷: **G01M 11/02**, G02C 7/00

(21) Application number: **01108766.5**

(22) Date of filing: **06.04.2001**

(54) **Indicating the performance of a spectacle lens by displaying an index in a visually understandable mode**

Darstellung der Leistung eines Brillenglases durch eine Indexanzeige in visuell verständlicher Weise

Indication de performance d'un verre à lunettes par affichage d'un index d'une manière intelligible visuellement

(84) Designated Contracting States:
**AT BE CH CY DE DK ES FI FR GB GR IE IT LI LU MC NL PT SE TR**

(30) Priority: **11.04.2000 JP 2000109704**

(43) Date of publication of application:
**17.10.2001 Bulletin 2001/42**

(73) Proprietor: **HOYA CORPORATION
Shinjuku-ku, Tokyo 161-8525 (JP)**

(72) Inventor: **Qi, Hua, Dr.
Shinjuki-ku, Tokyo 161-8525 (JP)**

(74) Representative: **Kuhnen & Wacker
Patent- und Rechtsanwaltsbüro
Prinz-Ludwig-Strasse 40A
85354 Freising (DE)**

(56) References cited:
**EP-A- 0 734 683          EP-A- 1 018 691
US-A- 5 661 816          US-A- 5 953 112**

## Description

### Field of the invention

The present invention relates to a method and apparatus for indicating the performance of a spectacle lens in a directly appreciable way.

### Prior Art

As a spectacle lens performance index indicating method, there have been known such methods of deriving an average refractive power and astigmatism of the surface of the lens and of indicating their distribution by contour lines on the surface of the lens.

However, the average refractive power and the astigmatism of the surface of the lens normally indicate only the performance of curved surface of the lens and it is unable to directly indicate the performance of the lens in observing the outside world through the lens. The inventors et. al. have then proposed an ocular optical system simulating method for simulating how things can be seen in observing the outside world through a spectacle lens as a method in which the performance of the lens in observing the outside world through the lens by the visual acuity of a person wearing the spectacle has been taken into consideration. This method is a method of creating and using, not an optical image projected to the retinal surface of the eyes but a rotation-based retinal image, which is defined as an image obtained by splicing images caught by the fovea of the eyeball rotated towards all object points within a visual field; as an image perceived by the eyes through the spectacle lens.

The rotation-based retinal image and its video image can represent fluctuation distortion and blur which can be perceived in viewing the outside world through the spectacle lens. However, the rotation-based retinal image is a result in which the lens imaging performance is reflected on the image in viewing each object point within the image and does not directly indicate the imaging performance itself. For instance, the rotation-based retinal image indicates the same result even if PSF (point spread function) is different at part of the image where changes of brightness are small. Then, it is unable to perfectly reflect PSF whose extension is small in case of an original image having less number of pixels.

It is therefore an object of the present invention to provide a spectacle lens performance indicating method and apparatus which can directly represent the performance in observing the outside world through a spectacle lens.

This is solved by claims 1, 12.

Improved embodiments result from the subclaims.

As means for solving the above-mentioned object, first means pertains to a spectacle lens performance indicating method characterized by the steps of defining and calculating a performance index indicating the performance of the spectacle lens to all object points within a visual field when the outside world is observed through the spectacle lens and of indicating the scale of the performance index in a visually understandable display mode.

Second means pertains to a spectacle lens performance indicating method characterized by the steps of defining and deriving a performance index indicating the performance of the spectacle lens to all object points within a visual field when the outside world is observed through the spectacle lens and of creating and displaying a performance index distribution image by giving a monochromatic luminosity or a set of RGB primary color luminosity which is determined in correspondence to the value of the performance index of the object point in the visual field, to each corresponding pixel of a original image or a distorted original image which is an image of a visual field seen through the spectacle lens.

Third means pertains to the spectacle lens performance indicating method of the first or second means, characterized in that the step of creating the performance index distribution image comprises:

an original image creating step of creating an image within a specific range of visual field which is observed by an eye having a specific center of rotation as an original image and of calculating the distance from all object points each corresponding to a pixel to the center of rotation;

a distorted original image creating step of deriving distortion of the visual field when seen through the spectacle lens by using a ray tracing method to create a distorted original image which is an image containing that distortion, and of calculating the spectacle lens passing position of the ray emitted from the object point corresponding to each pixel of the original image or distorted original image;

a spectacle frame position obtaining step of creating a spectacle frame mark image indicating the position of the spectacle frame on said original image or said distorted original image by using the data of the spectacle lens passing position of the ray from the object point obtained in said distorted original image creating step;

a performance index deriving step of deriving the performance index to all object points each corresponding to a pixel of said original image or said distorted original image in an optical system comprising said spectacle lens and an ocular model; and

an imaging step of creating a performance index distribution image by giving a monochromatic luminosity or a set of RGB primary color luminosity determined in correspondence to the value of the performance index derived in the performance index deriving step to the corresponding pixel of the original image or the distorted original image and of combining it with the spectacle frame mark image created in the spectacle frame position obtaining step.

Fourth means pertains to the spectacle lens performance indicating method as described in any one of the second through third means, characterized in that the step of creating the performance index distribution image comprises:

an original image creating step of creating and placing virtual objects made by computer graphics in a virtual 3-D space, placing a center of rotation at specific position within the virtual 3-D space to create an image of the virtual objects within a visual field which is a range within a specific pyramid, whose apex is located at said center of rotation and whose central axis is along a specific direction of sight line, measuring objective distances that are distances from all object points each corresponding to a pixel of said original image to said center of rotation;

a distorted original image creating step of tracing the center principal ray which is a principal ray emitted from the object point at the center of visual field and passing through the specific position of the spectacle lens, and the center ocular rotational direction which is the ocular rotational direction thereof by a ray tracing method, wherein a ray emitted from the object point and heading toward the center of rotation is defined as the principal ray and the exit direction of the principal ray from the rear surface of the spectacle lens is defined as the ocular rotational direction, deriving positions of all object points each corresponding to a pixel of said original image in an after-lens visual field having its central axis to be the said central ocular rotational direction as the ocular rotational direction to each object point by the ray tracing method, creating a distorted original image which is an image in the after-lens visual field, an image containing distortion to each of said object point; and deriving the spectacle lens passing position of the principal ray to each of said object point;

a spectacle frame position obtaining step of creating a spectacle frame mark image indicating the position of the spectacle frame on the original image or the distorted original image by using the data of spectacle lens passing position of the principal ray calculated in the distorted original image creating step;

a performance index deriving step of introducing an accommodation-dependent ocular optical system model as said ocular model and setting a power of accommodation of said ocular optical system model to the object point corresponding to each pixel of said original image or said distorted original image in accordance to the distance to the object point calculated in said original image creating step and the power of the spectacle lens at the spectacle lens passing position of the principal ray traced in said distorted original image creating step to derive the spectacle lens performance index in the combined optical system of said spectacle lens and the ocular optical system model turned according to the ocular turning direction to said object point; and

an imaging step of creating a performance index distribution image by giving a monochromatic luminosity or a set of RGB primary color luminosity determined in correspondence to the value of the performance index of said spectacle lens to each corresponding pixel of said original image or said distorted original image and of combining it with the spectacle frame mark image created in said spectacle frame position obtaining step.

Fifth means pertains to the spectacle lens performance indicating method related to any one of the first through fourth means, characterized in that a residual average power error in seeing each object point is defined as the performance index.

Sixth means pertains to the spectacle lens performance indicating method related to any one of first through fourth means, characterized in that a residual astigmatism in seeing each object point is defined as the performance index.

Seventh means pertains to the spectacle lens performance indicating method related to any one of the first through fourth means, characterized in that a clearness index indicating the degree of blur in seeing each object point is defined as the performance index.

Eighth means pertains to the spectacle lens performance indicating method related to the seventh means, characterized by the steps of deriving a shape of a small circle centered at the object point viewed through the spectacle lens, approximating it to an ellipse, and of defining a scale factor or the ratio of major and minor axes of said approximate ellipse as the deformation index.

Ninth means pertains to a spectacle lens performance indicating method related to any one of the first through fourth means, characterized in that a clearness index indicating the degree of blur in seeing each object point is defined as the performance index.

Tenth means pertains to a spectacle lens performance indicating method related to the ninth means, characterized by the steps of deriving PSF (Point spread function) on a retina in seeing each object point, deriving an approcimate ellipse, which indicates the spreading range of PSF, and of defining a half of diagonal length of a circumscribed rectangle of said approximate ellipse as the clearness index.

Eleventh means pertains to a spectacle lens performance indicating method for indicating the performance of a spectacle lens in observing the outside world through the spectacle lens, characterized by the steps of creating and placing virtual objects created by computer graphics within a virtual 3-D space, creating a story of changes of the position of the eye, the direction of central sight line, the lens system passing point, the deformation of virtual objects and the displacement of virtual objects in a time-series manner, creating the spectacle lens performance index distribution image by using the spectacle lens performance indicating method described in any one of the second through tenth means at each point of time in accordance to that story and editing each spectacle lens performance index distribution image to create and display video image of the spectacle lens performance index distribution image.

Twelfth means pertains to a spectacle lens performance indicating apparatus for indicating the performance of a spectacle lens in observing the outside world through the spectacle lens, comprising:

Original image creating means for creating and placing virtual objects made by computer graphics in a virtual 3-D space and for creating an image of specific angle range of visual field in which the virtual objects are observed by an eye having its center of rotation at a specific position and having specific direction of central sight line as an original image, and for calculating objective distances that are distances from all object points each corresponding to a pixel of said original image to the center of rotation of the eye;

distorted original image creating means for tracing the center principal ray, which is a principal ray emitted from the object point at the center of visual field and passing through a specific position of the spectacle lens, and the center ocular rotational direction which is the ocular rotational direction thereof by racing, wherein a ray emitted from an object point, passing through a certain position of the spectacle lens, and heading toward the center of rotation is defined as a principal ray and the exit direction of the principal ray from the rear surface of the spectacle lens is defined as the ocular rotational direction, and for deriving positions of all object points each corresponding to a pixel of said original image in the after-lens visual field having its central axis to be the said central ocular rotational direction, as the ocular rotational direction to each object point by ray tracing, and for creating a distorted original image which is an image containing distortion to each of said object point, and for deriving the spectacle lens passing position of the principal ray to each of said object point;

spectacle frame position obtaining means for creating a spectacle frame mark image indicating the position of the spectacle frame on said original image or said distorted original image by using the data of spectacle lens passing position of the principal ray calculated by said distorted original image creating means;

performance index deriving means for introducing an accommodation - dependent ocular optical system model as said ocular model and for setting a power of accommodation of said ocular optical system model to the object point corresponding to each pixel of said original image or said distorted original image in accordance to the distance to the object point calculated by said original image creating means and the power of the spectacle lens at the spectacle lens passing position of the principal ray traced by said distorted original image creating means so as to derive the spectacle lens performance index in the combined optical system of said spectacle lens and the ocular optical system model turned according to the ocular rotational direction to said object point; and

imaging means for creating a performance index distribution image by giving a monochromatic luminosity or a set of RGB primary color luminosity determined in correspondence to the value of the performance index of said spectacle lens to each corresponding pixel of said original image or said distorted original image and for combining it with the spectacle frame mark image created by said spectacle frame position obtaining means;

Thirteenth means pertains to a spectacle lens performance indicating apparatus for indicating the performance of a spectacle lens in observing the outside world through the spectacle lens, comprising means for creating and placing virtual objects created by computer graphics within a virtual 3-D space, and for creating a story of changes of the position of said eye, the direction of central sight line, the lens system passing point, the deformation of virtual objects and the displacement of virtual objects in a time-series manner, and for creating a spectacle lens performance index distribution image by using the spectacle lens performance indicating apparatus related to the twelfth claim at each point of time in accordance to that story and for editing each spectacle lens performance index distribution image so as to create and display a video image of the spectacle lens performance index distribution image.

BRIEF DESCRIPTION OF THE DRAWINGS

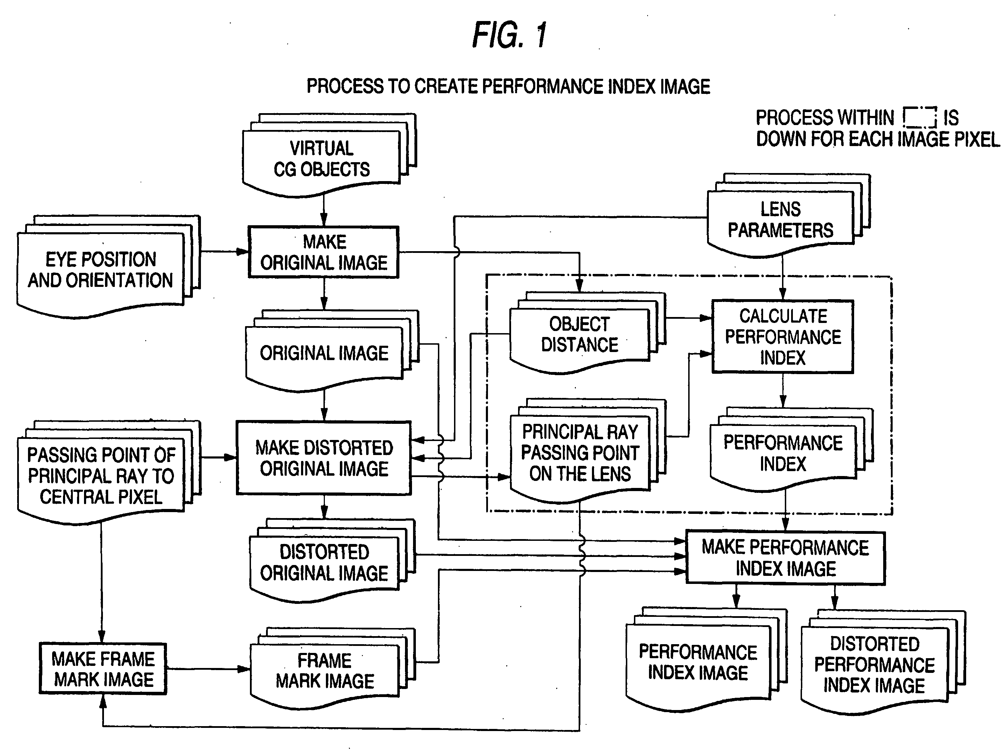

FIG. 1 is a flowchart showing the creation of a performance index distribution image.
FIG. 2 is a flowchart showing the creation of an average power error and a residual astigmatism distribution image;

FIG. 3 is a flowchart showing the creation of a deformation index distribution image;

FIG. 4 is a flowchart showing the creation of a clearness index distribution image;

FIG. 5 shows a coordinate system of visual field of naked eye;

FIG. 6 shows a coordinate system of visual field while wearing a spectacle lens;

FIG. 7 is diagram for explaining deformation ellipse;

Fig.8 is a table showing optical parameters (accommodation free) of Navarro's eye model;

Fig.9 is a table showing dependence of optical parameters of Navarro model eye on accommodation power A;

Fig.10 is a diagram for explaining PSF;

Fig. 11 is a diagram for showing a spectacle plus ocular optical system while watching an object point;

Fig.12 is a diagram showing methods for dividing the entrance pupil;

Fig.13 is an original image according to a first embodiment;

Fig.14 is an APE (Average Power Error) image according to the first embodiment:

Fig.15 is a residual astigmatism image according to a first embodiment;

Fig.16 is a deformation index image according to a first embodiment;

Fig.17 is a clearness index image according to a first embodiment;

Fig. 18 is a flowchart showing the creation of a motion image of a performance index image; and

Fig. 19 is a block diagram showing the structure of an apparatus for implementing the spectacle lens performance deriving and displaying method of the present invention.

A spectacle lens performance indicating method according to the first embodiment of the invention will be explained below with reference to the drawings.

The spectacle lens performance index indicating method of the present embodiment relates to a method of creating and displaying a distribution of spectacle lens performance index when 3-D objects created by computer graphics are seen through the lens as a still image. The creation of the distribution of the spectacle lens performance index of the first embodiment is roughly composed of (1) original image creating step, (2) distorted original image creating step, (3) spectacle frame position obtaining step, (4) performance index deriving step, and (5) imaging step.

(1) Original Image Creating Step:

This is a step of creating and placing virtual objects within a virtual 3-D space by computer graphics, of creating an image of virtual objects within a visual field having specific angle range observed by an eye whose center of rotation is positioned at a specific position and which has a specific central visual line direction as an original image and of measuring objective distances that are distances from all object points, each corresponding to a pixel of the original image, to the center of rotation of the eye. This will be explained below.

1) Creating virtual objects which are the basis of the original image:

At first, virtual 3-D objects are created and placed in a virtual 3-D space by the known computer graphic technique. For example, a room within which a desk, a chair, furniture and the like are placed or an outdoor space in which flower bed, trees, signs and the like are placed is created

2) Creating an original image:

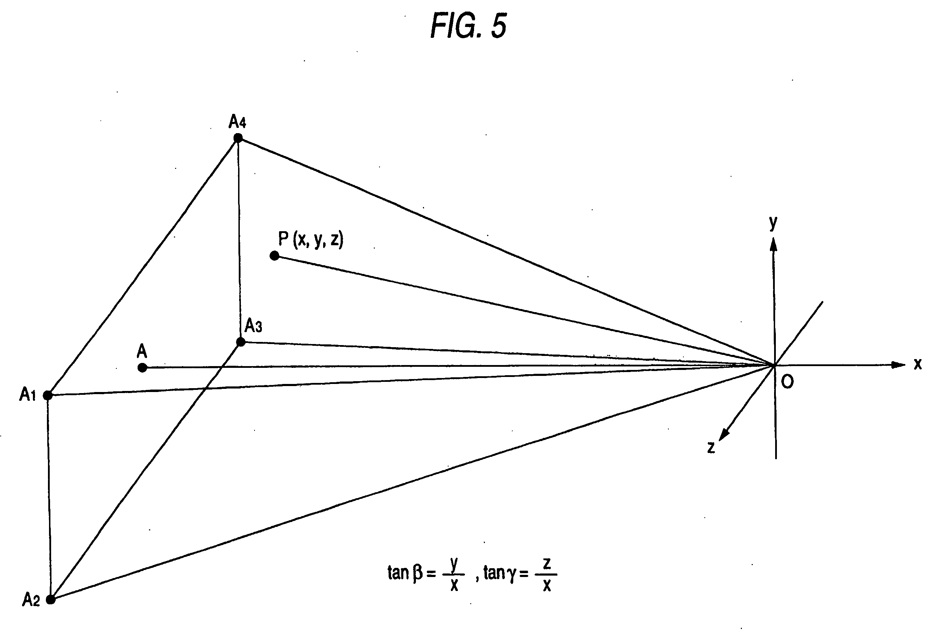

The image of the virtual objects created as described above within a specific visual field is created as an original image. The specific visual field is a specific angle range within a pyramid whose apex is the center of rotation of the eye located at a specific position and whose central axis is a sight line with a specific direction. That is, the pyramid $A_1A_2A_3A_4$, whose apex is the center of rotation O and whose central axis is the direction of sight line OA, is set as the visual field and an image within that range is created as shown in Fig.5. The coordinate of the original image of an arbitrary object point P(x,y,z) within the pyramid of visual field in the coordinate system whose origin is 0 and whose x-axis is AO is set as U = tanβ = y/x, V = tanγ = z/x.

Here, B and y are azimuth angles of P(x,y,z). Because an arbitrary straight line in the space is projected as a straight line on the U-V plane, projection is achieved without distortion. The image representing each object point by this projecting method will be set as the original image.

3) Calculating an object point distance:

The distance from the coordinate value of P(x,y,z) to the center of rotation is also measured in the original image creating step.

(2) Distorted Original Image Creating Step:

An image containing distortion caused by the spectacle lens is created and the lens passing position of the principal ray of each object point is found in this step. Here, the ray that emits from an object point and heads toward the center of rotation after passing through the spectacle lens is defined as the principal ray. Because the output direction of the principal ray from the rear surface of the spectacle lens is the direction in which the eyeball heads to see the object point, it is defined as an ocular rotational direction. Specifically, the principal ray from the object point at the center of visual field is defined as a central principal ray and the ocular rotational direction is defined as a central ocular rotational direction.

The distorted original image is an image representing the position of the object point corresponding to each pixel of the original image in the after-lens visual field, which is the visual field whose central axis is the central ocular rotational direction. The central principal ray and the central ocular rotational direction may be found by using a ray tracing method so that the principal ray which passes through a point on the spectacle lens is set in advance. The position of each object point in the after-lens visual field may be represented by the relative position of its ocular rotational direction to the central ocular rotational direction. The principal ray to each object point, its spectacle lens passing position and the ocular rotational direction may be found by the ray tracing method.

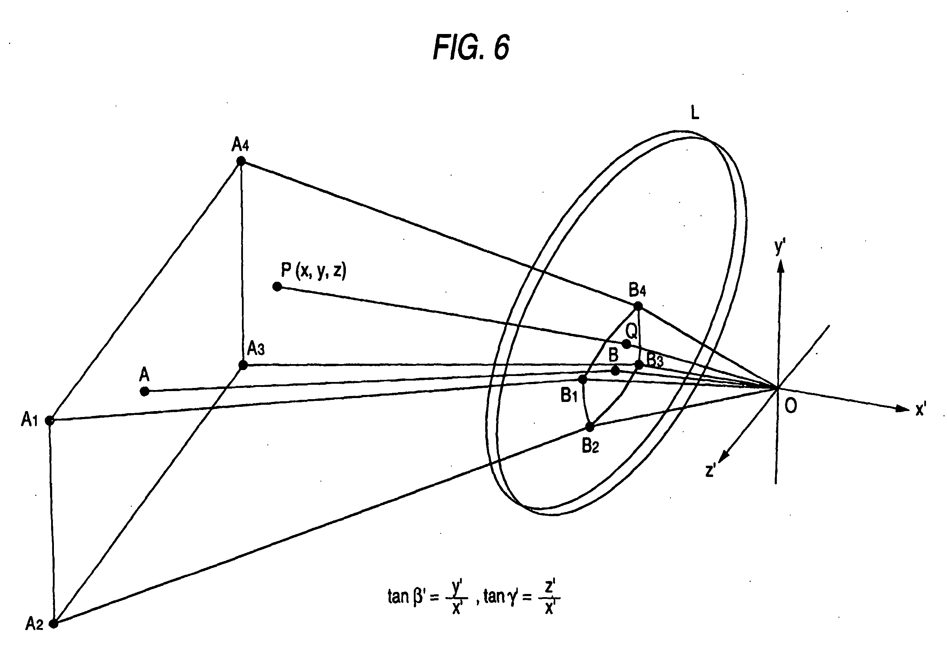

That is, when a spectacle lens L is placed between the center of rotation O and the object point A at the center of visual field in Fig.5 as shown in Fig.6, the eyeball must be turned not to the OA direction but to the direction of the lens passing point B in order to see A. The ray ABO is the central principal ray and the direction of BO, the central ocular rotational direction, should be the central axis of the after-lens visual field. The position of the arbitrary object point in the image in the after-lens visual field may be found as follows.

At first, x'-y'-z' coordinate system whose original point is O and whose x'-axis is the BO direction is set. The principal ray PQO from an arbitrary object point P(x,y,z) is found by the ray tracing method. The azimuth angles of the lens passing position Q(x',y',z') in x'-y'-z' coordinate system are $\beta'$ and $\gamma'$, the coordinates in the image of the visual field after passing the spectacle lens are U'=tan$\beta'$= y'/x', V'=tan$\gamma'$= z'/x'. When all object points within the visual field is projected to the U'-V' plane, the image of the after-lens visual field will be created. On this image an arbitrary straight line within the space is not always projected as a straight line. It turns out to be an image containing distortion caused by the lens. The image of the after-lens visual field is thus called a distorted original image. The lens passing positions of all principal rays each corresponding to an object point are also found in this distorted original image creating step. Although the ray tracing calculation must be carried out to all object points within the visual field to find their ocular rotational directions and passing positions on the spectacle lens, it is possible to obtain these data with less amount of calculation while their calculative errors are controlled within a certain range by using a mathematical method called spline interpolation.

(3) Spectacle Frame Position Obtaining Step:

This step is a step of creating a spectacle frame mark image by creating an original image of the edge of the spectacle frame, a hidden mark and the like or its position on the distorted original image by using information of the spectacle lens passing position found in the distorted original image creating step. It is possible to accurately grasp that the object on the image is seen through which position of the lens by comparing the image of the spectacle frame mark and the original image or the distorted original image.

(4) Performance Index Deriving Step:

This is a step of deriving the imaging performance index of all object points each corresponding to a pixel of the original image. For each object point, the imaging performance index is derived in an optical system which is the spectacle lens linked with an ocular model, which is rotated along the after-lens direction of the principal ray. An accommodation-dependent ocular model is introduced as an ocular optical system and its power of accommodation is set in accordance to the object point distance calculated in the original image creating step and the corrective power of the spectacle lens at the passing point of the principal ray traced in the distorted original image creating step.

The imaging performance index includes residual average power error, residual astigmatism, deformation index indicating degree of deformation, clearness index indicating the degree of blur, and the like. An example of the clearness index is a half diagonal length of circumscribing rectangular of an ellipse when the spreading range of PSF (Point spread function) is approximated to the ellipse.

1) Residual average power error and residual astigmatism deriving step:

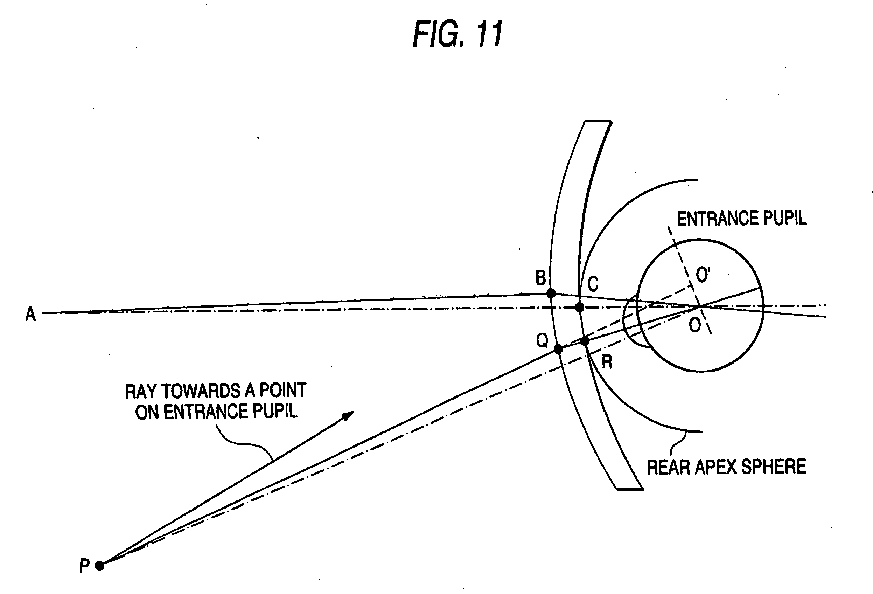

The ray emitted from an arbitrary object point P is refracted at point Q of the lens and heads toward the center of rotation O as shown in Fig.11. The lens refractive effect in seeing the point P may be represented by the shape of the wave front, which is originated from the point P as a spherical wave or a plane wave (when P locates at infinity) and propagated along the principal ray, at point R, the intersection of the ray and the rear apex sphere (the sphere centering on the center of rotation O and passing through the lens rear apex C). The shape of the wave front near the point R may be expressed by the following expression in general in a local coordinate system whose original point is the point R and the x-axis is the RO direction:

$$x_D = \frac{1}{2}D_{yy}y^2 + D_{yz}yz + \frac{1}{2}D_{yy}z^2$$

$D_{yy}$, $D_{yz}$ and $D_{zz}$ may be found by using the ray tracing method.

Further, the following expression turns out when the y-z axis is rotated by a certain angle by fixing the x-axis:

$$x_D = \frac{1}{2}D_{max}y^2 + \frac{1}{2}D_{min}z^2$$
$$= \frac{1}{2}D_{ave}(y^2 + z^2) + \frac{1}{4}D_{as}(y^2 - z^2)$$

The first item of the right side of the above expression is the component of spherical wave and the second item is the component of astigmatism wave. Here, $D_{max.}$ is the maximum curvature and $D_{min}$ is the minimum curvature:

$$D_{max} = \frac{1}{2}(D_{yy} + D_{zz}) + \left\{\frac{1}{4}(D_{yy} - D_{zz})^2 + D_{yz}^2\right\}^{1/2}$$

$$D_{min} = \frac{1}{2}(D_{yy} + D_{zz}) - \left\{\frac{1}{4}(D_{yy} - D_{zz})^2 + D_{yz}^2\right\}^{1/2}$$

The average curvature is:

$$D_{ave} = \frac{1}{2}(D_{max} + D_{min}) = \frac{1}{2}(D_{yy} + D_{zz}).$$

The component of astigmatism is defined as follows:

$$D_{as} = D_{max} - D_{min} = 2\left\{\frac{1}{4}(D_{yy} - D_{zz})^2 + D_{yz}^2\right\}^{1/2}.$$

Meanwhile, the refractive state of eye with astigmatism can also be expressed by the shape of corrective wave front at the point R. When the far corrective wave front including astigmatic power and direction is expressed by the following expression:

$$x_c = \frac{1}{2}C_{yy}y^2 + C_{yz}yz + \frac{1}{2}C_{zz}z^2,$$

the far average corrective power of eye turns out as:

$$C_{ave} = \frac{1}{2}(C_{yy} + C_{zz})$$

and the astigmatic corrective power turns out as:

$$C_{as} = 2\left\{\frac{1}{4}(C_{yy} - C_{zz})^2 + C_{yz}^2\right\}^{1/2}.$$

The wave front of accommodation power may be also defined in the same manner. Although it is conceivable that the astigmatic power and/or its direction may change according to the accommodative power, only the case of no astigmatic variation is explained here. Thus the wave front of the accommodative power at point R may be expressed as follows.

$$x_A = \frac{1}{2}A\left(y^2 + z^2\right)$$

Here, A is the power of accommodation.

Now, the wave front of the spectacle lens correcting effect in seeing the object point P may be expressed by the following expression:

$$x = x_C - x_A - x_D$$

When it is arranged as the spherical wave component and the astigmatic component by substituting and adjusting each expression described above and by performing rotation of the coordinate, it turns out as follows:

$$x = \frac{1}{2}\Delta D(y''^2 + z''^2) + \frac{1}{4}\Delta D_{ds}(y''^2 - z''^2)$$

Here,

$$\Delta D = C_{ave} + A - D_{ave}$$

$$\Delta D_{as} = 2\left\{\frac{1}{4}\left[(C_{yy} - D_{yy}) - (C_{zz} - D_{zz})\right]^2 + \left[C_{yz} - D_{yz}\right]^2\right\}^{1/2}$$

$\Delta D$ is defined as the residual average power error and $\Delta D_{as}$ is defined as the residual astigmatism. A takes the value between 0 and the maximum accommodative power $A_{max}$ to let the absolute value of $\Delta D$ be the minimum. When $\Delta D$ is positive, it is called as insufficient correction and when $\Delta D$ is negative, it is called as over-correction.

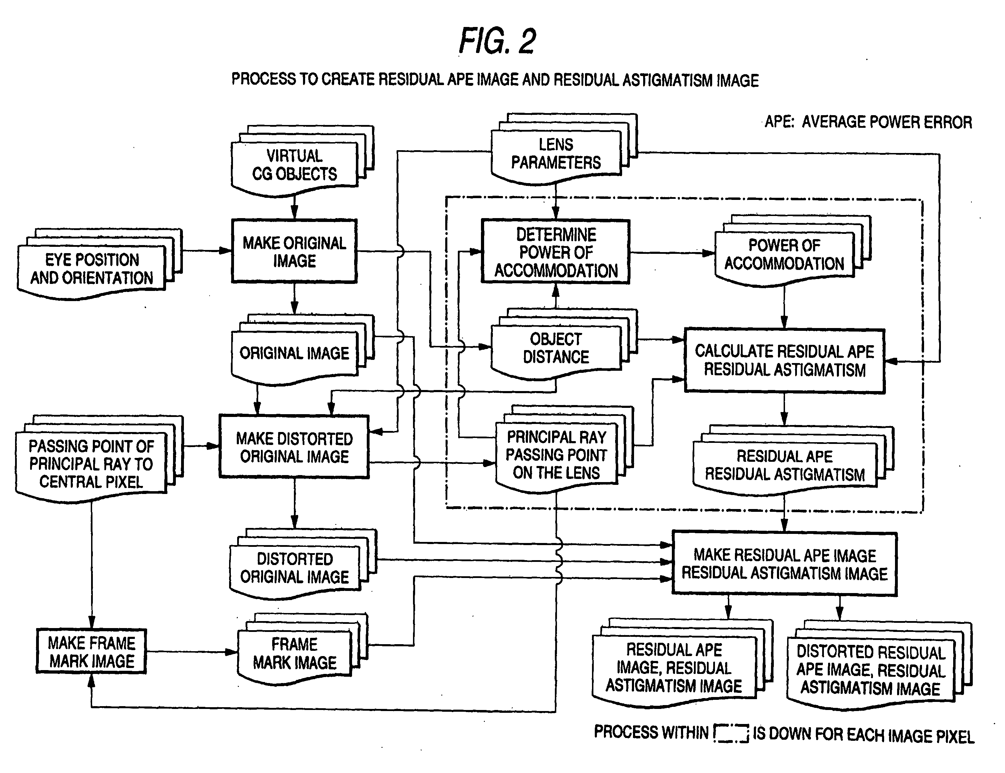

The residual average power error and residual astigmatism deriving step is a step of deriving the residual average power error and residual astigmatism for all object points each corresponding to a pixel of the original image or the distorted original image with the above-mentioned method. Although it seems to be a great amount of calculation to calculate for all object points, it is possible to obtain these data with less amount of calculation while their calculative errors are controlled within a certain range by using a mathematical method called spline interpolation. The distribution images of residual average power error and residual astigmatism are created along a flow shown in Fig.2.

2) Deformation index deriving step:

This step is a step of deriving a deformation index indicating degree of deformation with viewing an arbitrary object point through an arbitrary position on the spectacle lens. In this invention the deformation is considered how a small circle centered at the object point changes its shape through the spectacle lens. In most cases the shape can be considered to be an ellipse, so the deformation index can be defined using the parameters of that ellipse.

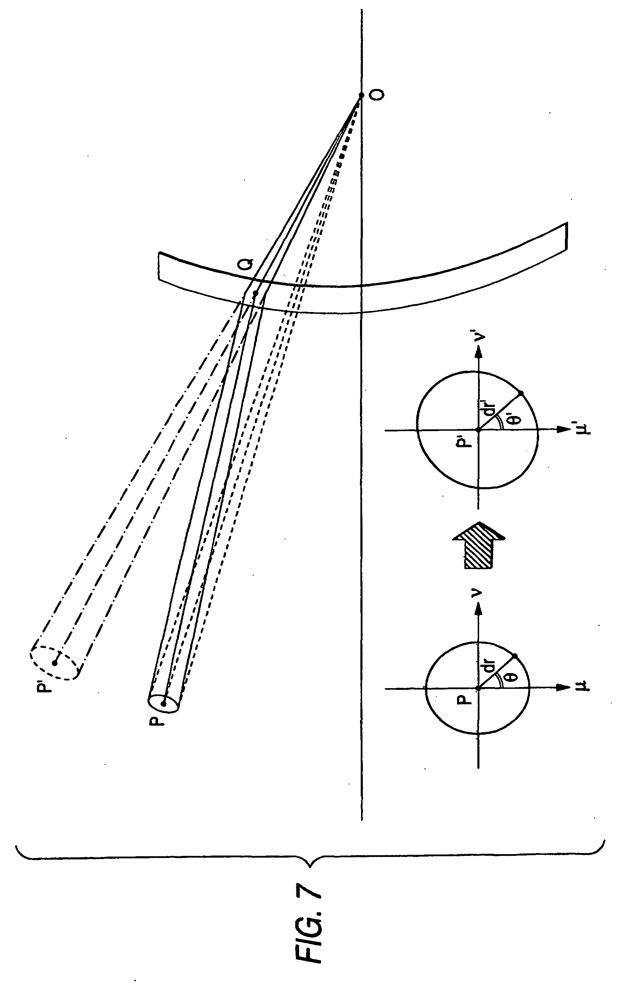

The deformed ellipse is derived by tracing nearby rays of the principal ray from the object point. As shown in Fig.7, tracing each principal ray from each point $(dr, \theta)$ on a small circle orbit of radius dr centered at object point P, its position in after-lens space ($dr'$,θ') can be obtained and its locus, i.e. the deformed ellipse can be obtained. Here dr dose not mean a length in the space, it means the tangent of the differential angle from OP. Practically, it is not necessary to trace all principal rays from points on the circle. If the value of the partial derived function of the differential angle in the after-lens space to differential angle in object space $\frac{\partial \mu'}{\partial \mu}, \frac{\partial \mu'}{\partial v}, \frac{\partial v'}{\partial \mu}, \frac{\partial v'}{\partial v}$, or reversely the partial derived function of the differential angle in the object space to differential angle in after-lens space $\frac{\partial \mu}{\partial u'}, \frac{\partial \mu}{\partial v'}, \frac{\partial v}{\partial u'}, \frac{\partial v}{\partial v'}$, is obtained, the deformed ellipse can be fixed. Following is the explanation to the latter case within which the partial derived functions are rewritten as $\frac{\partial \mu}{\partial u'} = A, \frac{\partial \mu}{\partial v'} = B, \frac{\partial v}{\partial u'} = C, \frac{\partial v}{\partial v'} = D$ :

$$d\mu = Ad\mu' + Bdv'$$

$$dv = Cd\mu' + Ddv'$$

$$dr^2 = d\mu^2 + dv^2$$

$$= \left(A^2 + C^2\right)d\mu'^2 + 2\left(AB + CD\right)d\mu'dv' + \left(B^2 + D^2\right)dv'^2$$

$$= dr'^2\left(\frac{A^2 + B^2 + C^2 + D^2}{2} + \frac{A^2 - B^2 + C^2 - D^2}{2}\cos 2\theta' + \left(AB + CD\right)\sin 2\theta'\right)$$

Therefore

$$\left(\frac{dr'}{dr}\right)^2 = \frac{p}{1 + e\cos 2(\theta' - \alpha)}.$$

Here

$$p = \frac{2}{A^2 + B^2 + C^2 + D^2}$$

$$e = \frac{\sqrt{(A^2 - B^2 + C^2 - D^2)^2 + 4(AB + CD)^2}}{A^2 + B^2 + C^2 + D^2} = \frac{\sqrt{(A^2 + B^2 + C^2 + D^2)^2 - 4(AD - BC)^2}}{A^2 + B^2 + C^2 + D^2}$$

$$\tan \alpha 2 = \frac{AB + CD}{A^2 - B^2 + C^2 - D^2}$$

It is obvious that $p > 0$, $0 \le e \le 1$. So the relationship between the magnifying power $\frac{dr'}{dr}$ and the azimuth θ' should be an ellipse. It is called a deformation ellipse. The maximum and minimum magnifying power, i.e. the major and minor axis of the deformation ellipse are respectively

$$a = \sqrt{\frac{p}{1-e}}, b = \sqrt{\frac{p}{1+e}}.$$

In this invention, a scale factor $\sqrt{ab}$, a ratio of major axis to minor axis $\frac{a}{b}$ and a combination of the two values are defined as deformation index indicating degree of deformation. Here,

$$\sqrt{a} = \sqrt{\frac{p}{1-e^2}} = \cdots = \frac{1}{|AD-BC|}, \frac{a}{b} = \sqrt{\frac{1+e}{1-e}}.$$

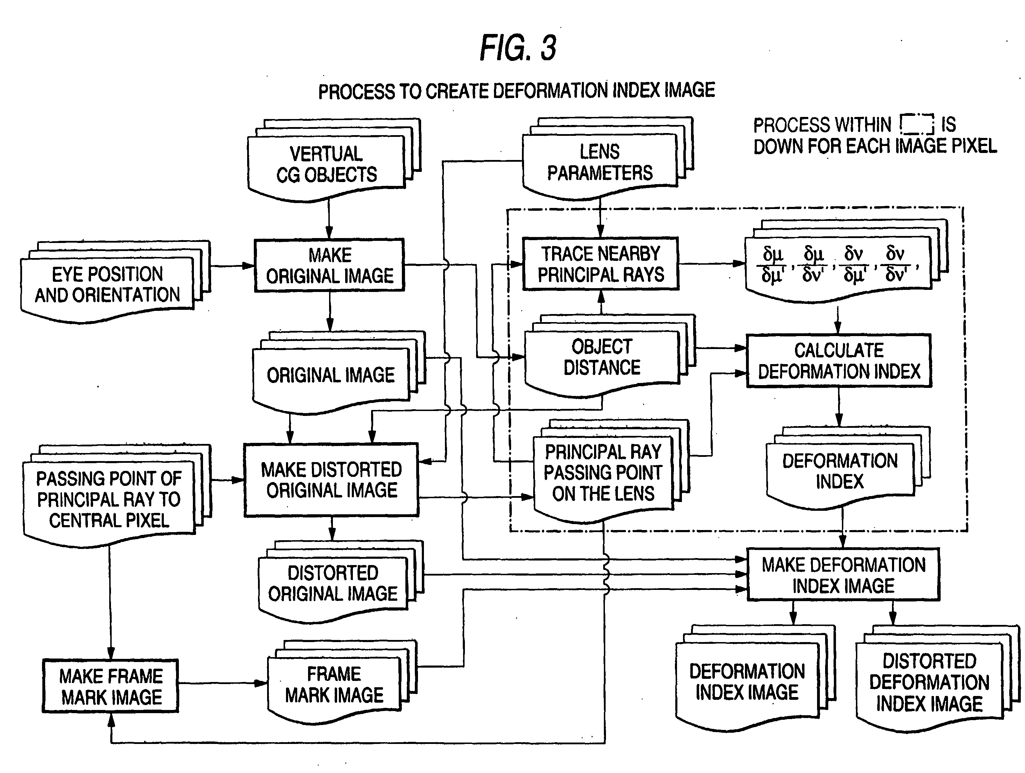

The deformation index-deriving step is a step of deriving the deformation indexes for all object points each corresponding to a pixel of the original image or the distorted original image with the above-mentioned method. Although it seems to be a great amount of calculation to calculate for all object points, it is possible to obtain these data with less amount of calculation while their calculative errors are controlled within a certain range by using a mathematical method called spline interpolation. The distribution images of deformation index are created along a flow shown in Fig. 3. Besides tracing the nearby principal rays, $\frac{\partial \mu}{\partial u'}, \frac{\partial \mu}{\partial v'}, \frac{\partial v}{\partial u'}, \frac{\partial v}{\partial v'}$ can also be obtained by calculate the values of partial derived function of a spline interpolation function of principal ray data obtained previously.

3) PSF deriving step:

This step is a step of deriving PSF (Point spread function) of all object points each corresponding to a pixel of the original image. For each object point a combined optical system is set introducing an accommodation-dependent model. The optical system is the spectacle lens linked with the ocular accommodation-dependent model, which is turned to the after-lens direction of the principal ray of the object point traced in the original image creating step and whose power of accomodation is set according to the objective distance and the corrective power of the spectacle lens at the passing point of the principal ray traced in the distorted original image creating step. The PSF indicates luminous distribution on the retina of the accommodation-dependent ocular model, which is derived by tracing rays emitted from the object point, pass through the combined optical system and reach the retina.

a) Introducing accommodation-dependent ocular model:

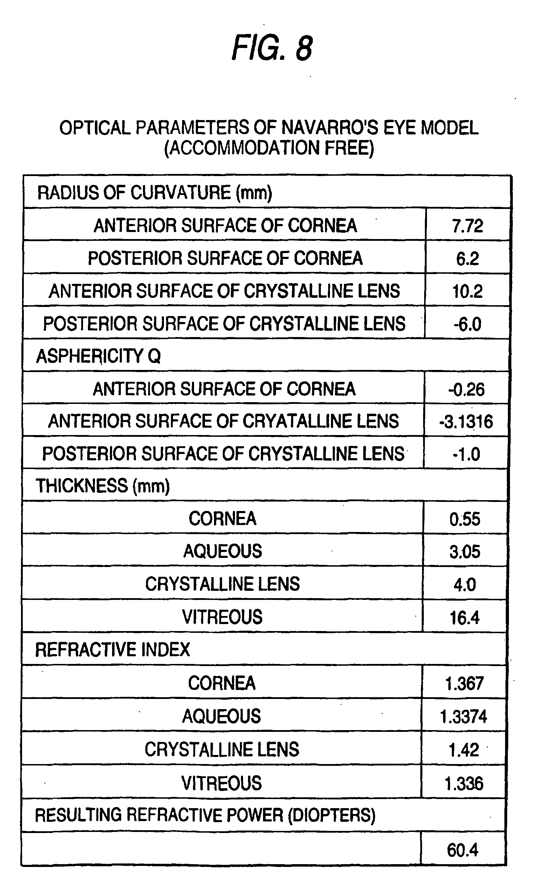

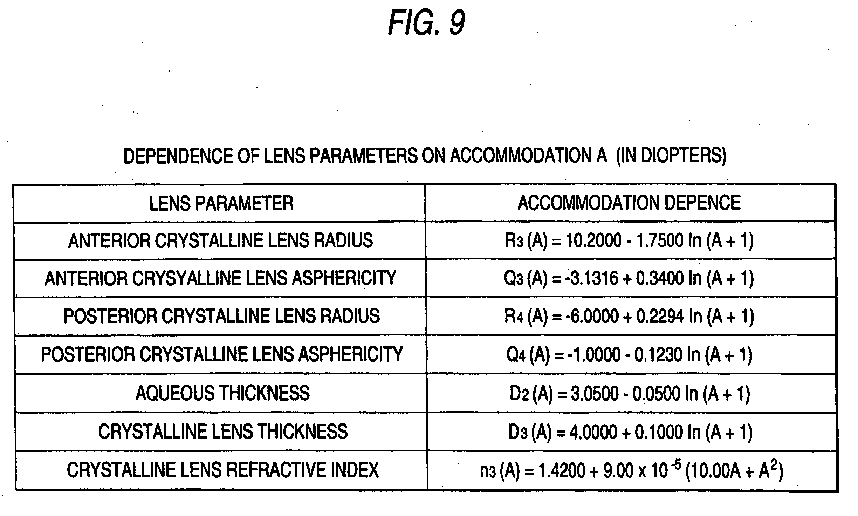

It is necessary to introduce an ocular optical system in order to derive PSF on the retina. In this case, accommodation must be taken into account in order to see objects with different distances. In the present embodiment, the accommodation-dependent ocular model of R. Navarro et al. is used. It is said that not only a paraxial value, but also spherical aberration and color aberration are adjusted to the measurements of the eye in the Navarro model. It has a simple four-surface structure and among them, three surfaces are aspheric surfaces of axially symmetrical quadratic surface. Because the crystalline lens has not refractive index distributed structure, its tracing calculation is simple. Radius, thickness and aspheric degree vary in proportional to the logarithm of the power of accomodation. Fig.8 shows optical parameters of the ocular model of Navarro et al. in the accommodation free state and Fig.9 shows dependent formulas of the accommodation-dependent parameters. The aspheric surface is expressed as $y^2+z^2+(1+Q)x^2-2Rx=0$. Q denotes the degree of asphericity.

b) Calculation of PSF

A) Meaning of PSF:

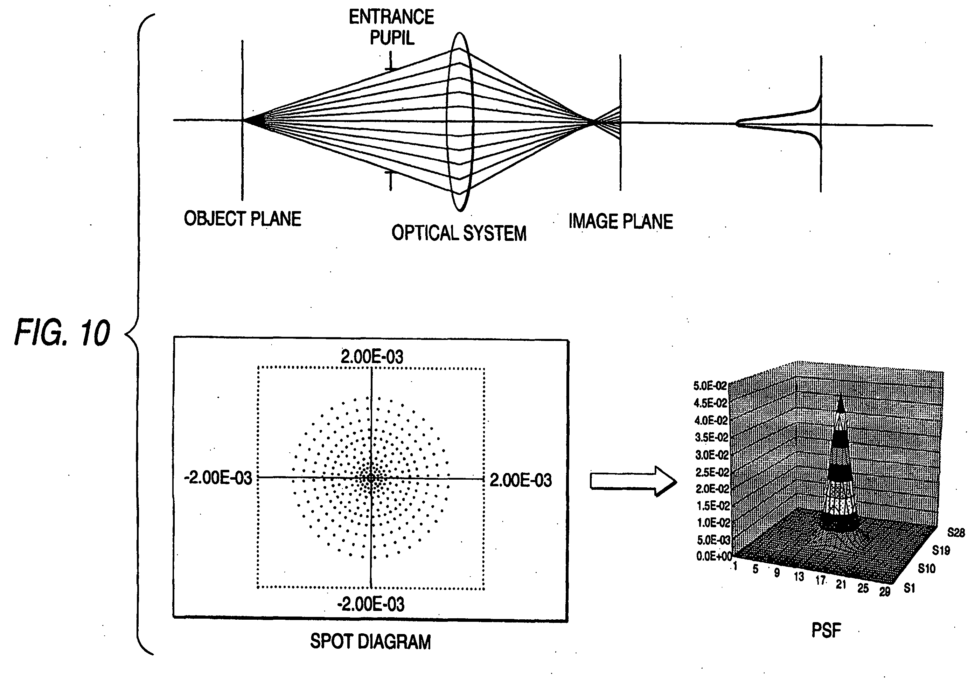

As shown in Fig.10, PSF is a function representing the state of a cluster of spots where rays irradiated from one point of a substantial object are condensed on the image plane and may be represented by a number of spots per unit area. Although all spots are condensed to the image forming point as PSF and their distribution turns out to be a vertical straight line if the optical system is perfect, it normally takes a form similar to two-dimensional normal distribution.

B) PSF deriving method:

Fig. 11 is a diagram showing the relationship between tracing rays and an entrance pupil in an optical system for deriving PSF when the object point P is seen through point Q on the lens. The ray from the object point P is refracted at the point Q on the surface of the lens and its direction is bended toward center of rotation O. It seems to the eye that the object point P is located on the extension of the exit ray QO. Thus the optical axis of the eyeball is turned in the direction QO at first. Then the accommodative power is determined in accordance to the distance from P to O and the refractive power of the spectacle lens at the point Q. At this time, the optical system is fixed and it becomes possible to derive PSF.

As described above, PSF is the density of spots on the image plane of the rays emitted from the object point and passing through the center of a large number of small areas equally dividing the whole entrance pupil. Strictly speaking, the position of the entrance pupil is the conjugative point on the object side of the iris. However, the iris changes its position while the eye rotates and accommodates. Meanwhile, the center of rotation is usually a fixed point and the distance from the conjugate point of the iris is very small as compared to the distance to the object. Therefore, it is reasonable to put the entrance pupil at the center of rotation in the case of naked eye. In the case of wearing a spectacle lens, the entrance pupil of the whole optical system, which is the conjugative point to the spectacle lens of the center of rotation, locates at a point O' on the extent of straight line PQ. Although the length PO' varies slightly while changing the position Q as the corrective power varies, it is simply assumed that PO=PO'.

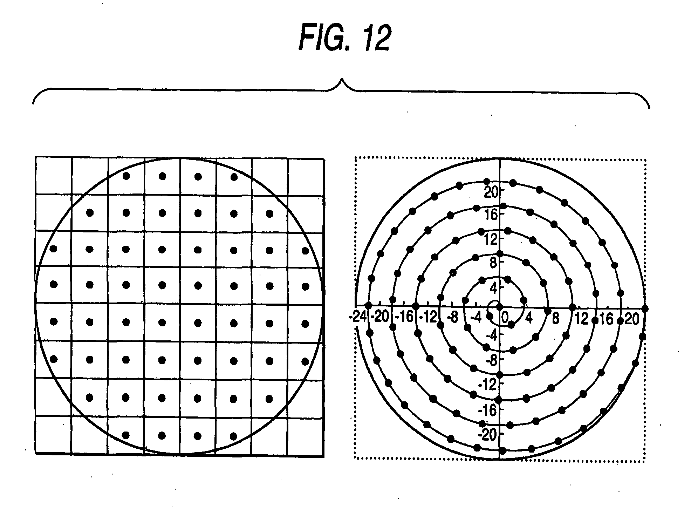

It is important to divide the entrance pupil into a large number of equally distributed small areas to derive PSF accurately. There are two kinds of dividing methods of grid division and spiral division as shown in Fig.12. Although the grid division allows a good uniformity to be obtained, it allows to trace only about 70 % of predetermined rays because it has wasteful parts at four corners. Meanwhile, the spiral division causes no wasteful ray tracing while keeping the uniformity. Then, the spiral division is adopted in the present embodiment.

Thus, PSF may be derived by tracing a large number of rays emitted from the object point and passing through the uniformly divided points of the entrance pupil and by calculating the density of the spots on the retina. Although rays emitted from all object points and pass through all divided points of the entrance pupil must be traced to derive PSF with the method described above, the use of mathematical technique of spline interpolation allows the position of the spots on the retina to be calculated with less amount of calculation within a certain error range and PSF which is the density of spots on the surface of retina, to be derived.

PSF derived with the above-mentioned method can be used to express accurately how blurred a visual field should be wearing a spectacle lens by a convolution operation with the distorted original image. However, it is inconvenient to use the PSF in this mode for quantitative analysis of the image forming performance of lens because its calculation time is long. The quantitative analysis may be carried out readily by approximating the PSF to a certain kinds of function and by using parameters of that function. A method of approximating the PSF to two-dimensional normal distribution function will be described below.

[Expression 1]

$$f(\mu,v) = \frac{1}{2\pi\sigma_\mu\sigma_v\sqrt{1-\rho^2}} \exp\left(-\frac{1}{2(1-\rho^2)}\left(\frac{\mu^2}{\sigma_\mu^2} - 2\rho\frac{\mu v}{\sigma_\mu\sigma_v} + \frac{v^2}{\sigma_v^2}\right)\right)$$

Here, $\mu$ and $v$ are deviations in the vertical and horizontal directions on the retina, respectively, and $\sigma_\mu$, $\sigma_v$ and $\rho$ are parameters of the normal distribution. These parameters have the following quality:

$-1 < \rho < 1$
$\sigma_\mu > 0$
$\sigma_v > 0$

The locus of the point where the exponential part of the above expression is -1/2 is an ellipse represented by the following expression:

$$\frac{\mu^2}{\sigma_\mu^2} + \frac{v^2}{\sigma_v^2} - 2\rho\frac{\mu v}{\sigma_\mu\sigma v} = 1 - \rho^2.$$

This ellipse can be used to indicate the spreading range of PSF. The ratio of lengths of the major and minor axes of the ellipse and the direction of the major axis are closely related with the size and direction of astigmatism.

To obtain the parameters $\sigma_\mu$, $\sigma_v$ and $\rho$ of the two-dimensional normal distribution function from the ray data, it is thinkable to substitute statistic values of spots on retina (each spot corresponds to a divisional point on the entrance pupil) for them. That is,

[Expression 2]

$$\sigma_{\mu 0} = \sqrt{\frac{1}{N}\sum_i \mu_i^2}$$

$$\sigma_{v0} = \sqrt{\frac{1}{N}\sum_i v_i^2}$$

$$\rho = \frac{\sum_i \mu_i v_i}{N\sigma_{\mu 0}\sigma_{v0}}$$

Here, N is a number of rays and ($\mu_i$, $v_i$) is the coordinate of spot.

When $\sigma_{\mu 0}$, $\sigma_{v 0}$ and $\rho$ are set as parameters of approximate normal distribution, there may be a big difference between the two-dimensional normal function and the actual PSF in some case of distribution. In such a case, it is necessary to determine an appropriate proportional constant *k* to regulate the parameters and let $\sigma_{\mu}=k\sigma_{\mu 0}$ and $\sigma_{v}=k\sigma_{v 0}$ in order to fit the actual PSF.

The parameters of the approximate two-dimensional normal distribution function of the PSF corresponding to an object point may be derived as mentioned above. Although it is necessary to carry out the ray tracing and statistic calculation to obtain $\sigma_{\mu}$, $\sigma_{v}$ and $\rho$ for all object points, the amount of calculation can be reduced while the calculative error can be controlled within a certain range using a mathematical method of spline interpolation.

c) Calculation of clearness index from PSF

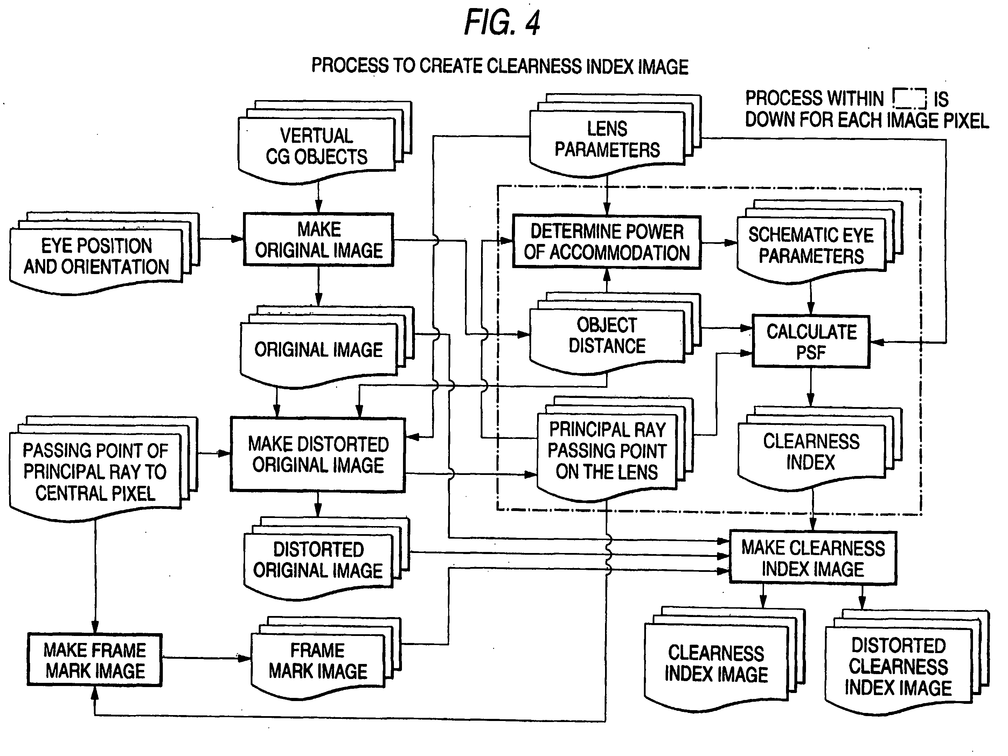

The clearness index indicates the scale of spreading range of PSF (Point Spread Function). The smaller it is, the finer the image quality is and the visually clearer it is. The spreading range of a PSF, approximated by the two-dimensional normal distribution function, may be represented by an ellipse as mentioned above. So the clearness index of that PSF may be defined as a value that indicates the size of the ellipse. There are several sizes to be selected like the area, $\sigma_{\mu}+\sigma_{v}$, $\sigma_{\mu}\sigma_{v}$, $(\sigma_{\mu}^2+\sigma_{v}^2)^{1/2}$ etc. If the area of the ellipse is defined as clearness index, the clearness index is zeroed when the ellipse is degenerated to a line segment. That means the image quality in good no mater how big the residual astigmatism is. So it is not appropriate to define the area of the ellipse as clearness index. Also it should be assured that the clearness index remains constant while rotating the ellipse without changing its shape. Then $\sigma_{\mu}+\sigma_{v}$ and $\sigma_{\mu}\sigma_{v}$ are not appropriate to be defined as clearness index. In the present embodiment $(\sigma_{\mu}^2+\sigma_{v}^2)^{1/2}$, which means half diagonal length of a circumscribed rectangle, is defined as clearness. A clearness index distribution image is created in accordance to a flow shown in Fig.4.

(5) Imaging Step:

This step is a step of creating a performance index distribution image and combining it with the lens frame mark image created in the frame position obtaining step. The performance index distribution image is based on the original image or distorted original image. For each pixel a monochromatic luminosity or a set of RGB primary color luminosity is given in accordance to the value of performance index of the object point corresponding to the pixel derived in the performance index obtaining step.

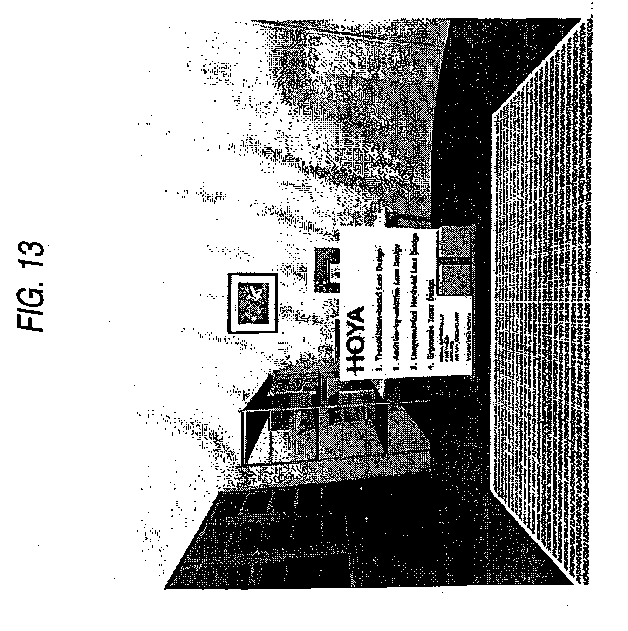

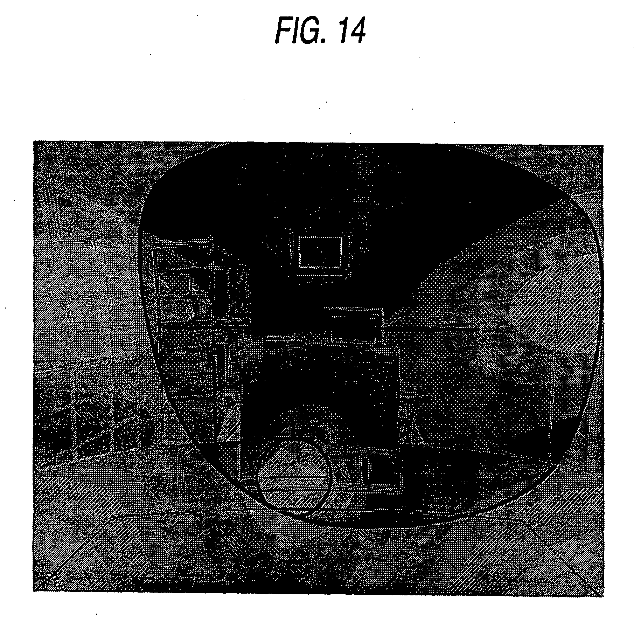

Fig.13 is a drawing showing the original image according to the first embodiment. A print is placed on a desk and a white board is placed about 80 cm ahead. There is also a wall 2.5 m ahead. Fig.14 is an average power error distribution image when this visual field is seen through a spectacle progressive lens (HOYALUX SUMMIT: the name of a product of Hoya Co., Ltd.) of 0.00D ADD2.50D for right eye. The visual field is 96° x 80°. The spectacle frame has 40 mm of vertical size and 50 mm in width. Datum lines and a ring for measuring far and near powers are indicated on the frame. The change of color from blue, cyan, green to yellow means over-correction ($\Delta D$ is of plus value) is increasing. The change of color from blue to magenta means insufficient-correction ($\Delta D$ is of minus value) is increasing. In Fig.14 average power error corresponding to each pixel is reassigned to be the nearest value of the discrete value sequence of ... -0.75D, -0.5D, -0.25D, 0.0D, 0.25D, 0.5D, ... etc.

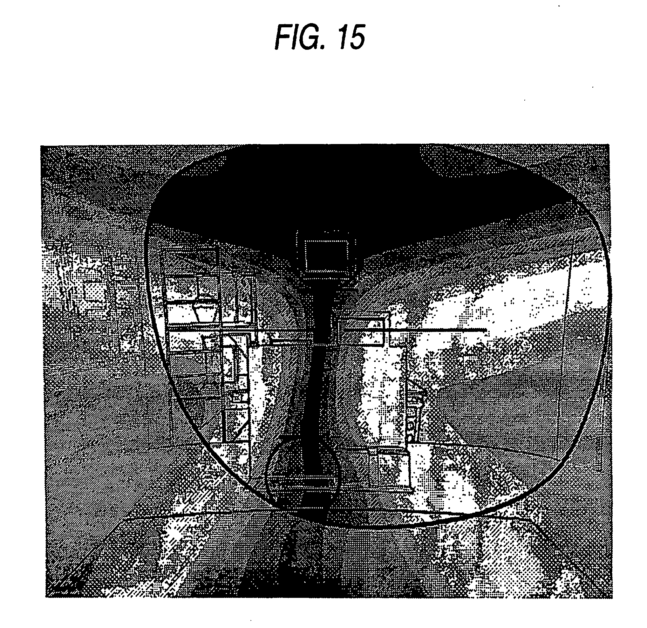

Fig.15 is a residual astigmatism distribution image of the same visual field. The change of color from blue, cyan, green, yellow, orange to red means residual astigmatism is increasing. In Fig.15 residual astigmatism corresponding to each pixel is reassigned to be the nearest value of the discrete value sequence of 0.00D, 0.25D, 0.5D, 0.75D, 1.00D... etc.

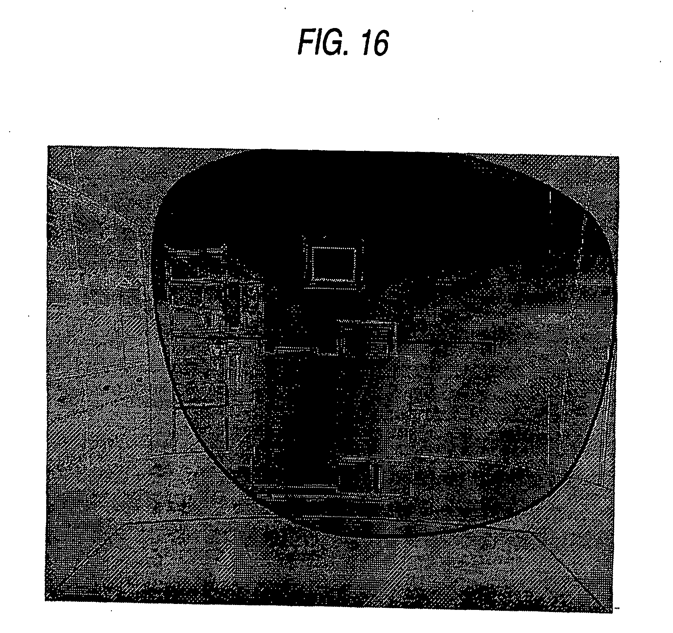

Fig.16 is a deformation index distribution image of the same visual field. Hear the deformation index means a ratio of the major axis to the minor axis $\frac{a}{b}$ of the deformation ellipse. The change of color from blue to magenta means deformation index is increasing. Here the value of monochromatic luminosity N for each pixel is an integer calculated by $N = \frac{\frac{a}{b}-1}{1.2-1} \cdot 255$ and if N>255 then N=255. Further, the RGB value is given by

$$R = \begin{cases} 2N+1 & N < 128 \\ 255 & N \geq 128 \end{cases}$$

$$G = 0$$

$$B = \begin{cases} 255 & N < 128 \\ 511-2N & N \geq 128 \end{cases}$$

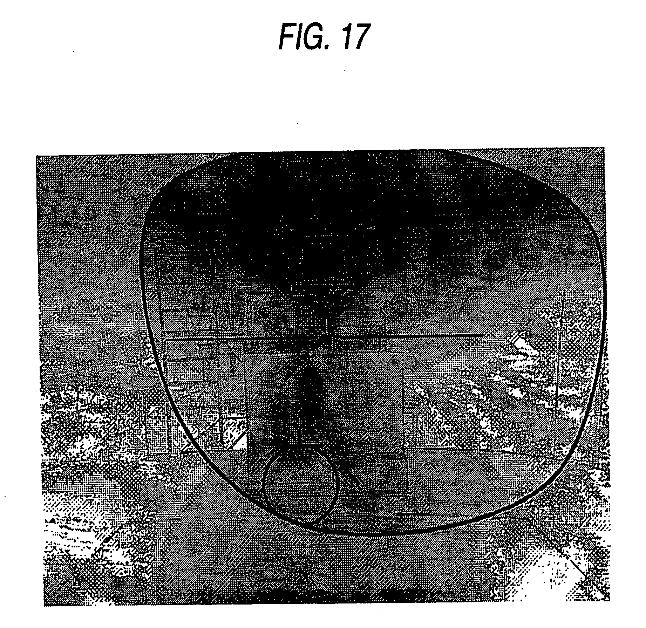

Fig.17 is a clearness index distribution image of the same visual field. Here the clearness index means half the diagonal length of a circumscribed rectangle of the ellipse representing the PSF range. The meaning of the clearness index, however, is not the length on the retina. It is the tangent of a relative visual angle. The change of color from blue, cyan, green, yellow, orange to red means that the clearness index is increasing. Here the value of monochromatic luminosity N for each pixel is an integer calculated by $N = 4.0 \times 10^{-3} \times P$ where P is the clearness index. If N>255 then N=255. Further, the RGB value is given by

$$R = \begin{cases} 0 & N \leq 64 \\ 2(N-64) & 64 < N < 192 \\ 255 & N \geq 192 \end{cases}$$

$$G = 255 - \frac{2 \ (N-127.5)^2}{127.5} \qquad .$$

$$B = 255 - R$$

It can be seen that the above-mentioned performance index distribution images faithfully reproduce the image forming performance of the spectacle lens. The present embodiment allows the lens image forming performance when seen through the spectacle lens to be indicated in combination with an image seen in the state when the lens is used and allows the lens performance in use to be evaluated

(Second Embodiment)

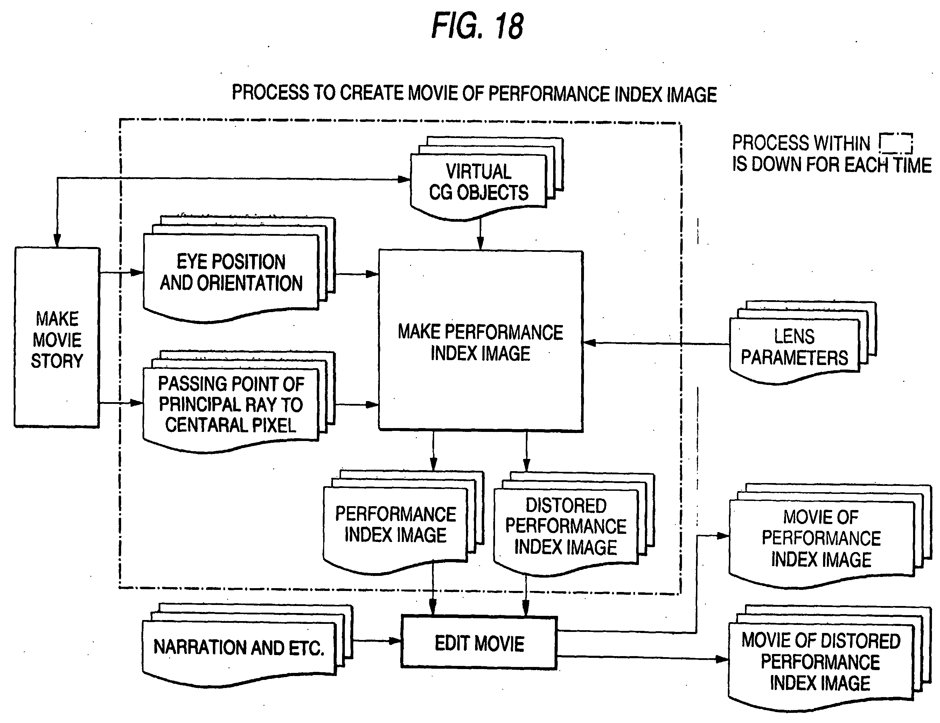

This embodiment is a case of obtaining video image by creating a large number of still images of the performance index distribution image in the first embodiment in time-series manner by changing the position of the eye and the direction of sight line. Accordingly, because the present embodiment is basically the same as the first embodiment except of adding steps of creating a story how to change the position of the eye, the direction of sight line, the displacement and deformation of the virtual objects in the time-series manner and of editing the respective still images at all points of time of the story into a video image, its overall flow will be shown in Fig.18 and its detailed explanation will be omitted here. It is noted that it is needless to say that a story at the lens passing point is required in the story. As a method for creating the story, the adoption of the spline interpolation allows a smooth motion of the line of sight to be realized without defining the position of the eye, the direction of line of sight and the lens passing point at all points of time.

The second embodiment described above allows the video image to be obtained in reproducing the case of changing the position of the eye, moving the line of sight and changing the passing position of line of sight on the lens, which is the performance in seeing the outside world through the progressive lens. Accordingly, it becomes possible to evaluate the image forming performance of the spectacle lens in the mode very close to the actual use. Further, it becomes possible to evaluate it while confirming the move of line of sight on the lens by indicating the lens frame mark on the video image indicating screen.

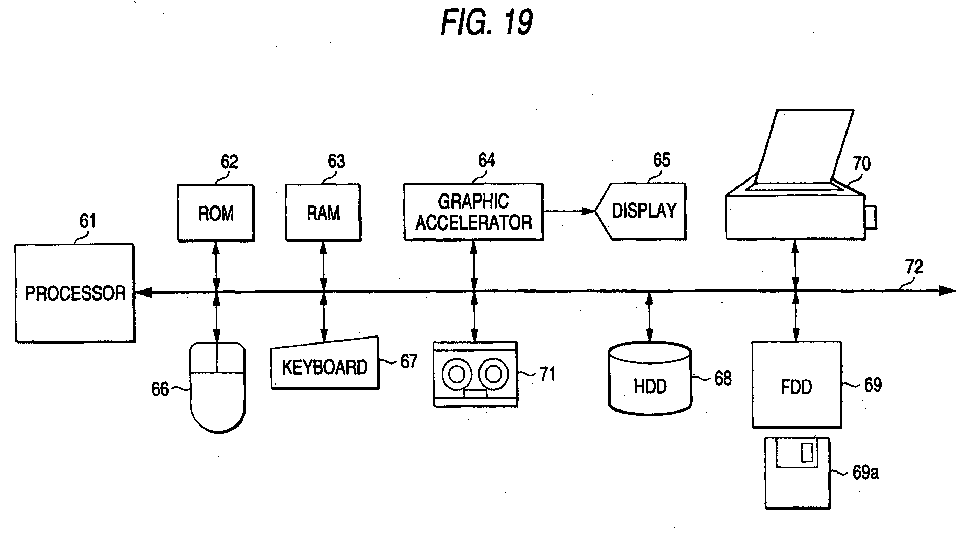

Next, an apparatus for embodying the methods described in the above-mentioned embodiments will be briefly explained. Fig.19 is a block diagram showing the schematic structure of the apparatus for embodying the methods of the embodiments. As shown in Fig.19, the apparatus comprises a processor 61, a read-only memory (ROM) 62, a main memory 63, a graphic control circuit 64, a display 65, a mouse 66, a keyboard 67, a hard disk drive (HDD) 68, an external storage (FDD) 69, a printer 70, a magnetic tape unit 71 and the like. These components are connected via a data bus 72.

The processor 61 generally controls the whole apparatus. Programs necessary in starting are stored in the read-only memory 62. Programs for creating and displaying the performance index distribution image are stored in the main memory 63. The graphic control circuit 64 contains a video memory and converts obtained image data into display signals to be displayed on the display 65. The mouse 66 is a pointing device for selecting various icons and menu on the display. A system program and programs for creating and displaying the performance index distribution image are stored in the hard disk drive 68 and are loaded to the main memory 63 after the apparatus is turned on. It also stores data such as the performance index distribution image temporarily.

The external storage 69 inputs required data such as original image data through an external storage media 69a or saves it to the external storage media 69a as necessary. The printer 70 is used in printing out the performance index distribution image and the like. The magnetic tape unit 71 is used in saving programs and data to a magnetic tape as necessary. It is noted that the apparatus having the basic structure described above may be constructed by using a high-performance personal computer or a conventional general-purpose computer.

[Effect of the Invention]

As described in detail above, the inventive spectacle lens performance indicating method and apparatus are characterized by defining and deriving the performance index indicating the performance of the spectacle lens to all object points within a visual field when the outside world is observed through the spectacle lens and in indicating the scale of the performance index in the visually understandable display mode. Thereby, it allows the performance of the spectacle lens in wearing it to be evaluated visually in the manner very close to the state of actual use.

**Claims**

1. A method for indicating a spectacle lens performance, wherein

   - a performance index is defined and calculated, indicating the performance of the spectacle lens to all object points within a visual field when the outside world is observed through the spectacle lens, and
   - a scale of the performance index is displayed in a visually understandable mode.

2. A method according to claim 1, with the steps of:

   defining and deriving a performance index indicating the performance of the spectacle lens to all object points within a visual field when the outside world is observed through the spectacle lens and creating and displaying a performance index distribution image by giving a monochromatic luminosity or a set of RGB primary color luminosity which is determined in correspondence to the value of the performance index of the object point in the visual field, to each corresponding pixel of an original image or a distorted original image which is an image of a visual field seen through said spectacle lens.

3. A method according to claim 1 or 2, wherein the step of creating said performance index distribution image comprises:

   an original image creating step of creating an image within a specific range of visual field which is observed by an eye having a specific center of rotation as an original image and of calculating distances from all object points each corresponding to a pixel to said center of rotation;
   a distorted original image creating step of deriving distortion of the visual field when seen through said spectacle lens by using a ray tracing method to create a distorted original image which is an image containing that distortion and of calculating the spectacle lens passing position of the ray emitted from the object point corresponding to each pixel of the original image or distorted original image;
   a spectacle frame position obtaining step of creating a spectacle frame mark image indicating the position of the spectacle frame on said original image or said distorted original image by using the data of the spectacle lens passing position of the ray from the object point calculated in said distorted original image creating step;
   a performance index deriving step of deriving the performance index to all object points each corresponding to a pixel of said original image or said distorted original image in an optical system comprising said spectacle lens and ocular model; and
   an imaging step of creating a performance index distribution image by giving a monochromatic luminosity or a set of RGB primary color luminosity determined in correspondence to the value of performance index derived in said performance index deriving step to each corresponding pixel of said original image or said distorted original image and of combining it with the spectacle frame mark image created in said spectacle frame position obtaining step.

4. A method according to anyone of claims 1 through 3, wherein the step of creating said performance index distribution image comprises:

   an original image creating step of creating and placing virtual objects made by computer graphics in a virtual 3-D space, placing a center of rotation at a specific position within the virtual 3-D space to create an image of those virtual objects within a visual field which is a range within a specific pyramid, whose apex is located at said center of rotation and whose central axis is along a specific direction of sight line, as an original image and of measuring objective distances that are distances from all object points each corresponding to a pixel of said original image to said center of rotation;

a distorted original image creating step of tracing the central principal ray, which is a principal ray emitted from the object point at the center of visual field and passing through a specific position of the spectacle lens, and the central ocular rotational direction which is the ocular rotational direction thereof by a ray tracing method, wherein a ray emitted from an object point, passing through a certain position of the spectacle lens and heading toward the center of rotation is defined as a principal ray and the exit direction of the principal ray from the rear surface of the spectacle lens is defined as the ocular rotational direction; deriving positions of all object points each corresponding to a pixel of said original image in the after-lens visual field having its central axis to be the said central ocular rotational direction, as the ocular rotational direction to each object point by the ray tracing method; creating a distorted original image which is an image in the after-lens visual field, that is, an image containing distortion to each of said object point; calculating the spectacle lens passing position of the principal ray to each of said object point;

a spectacle frame position obtaining step of creating a spectacle frame mark image indicating the position of the spectacle frame on said original image or said distorted original image by using the data of spectacle lens passing position of the principal ray traced in said distorted original image creating step;

a performance index deriving step of introducing an accommodation dependent ocular optical system model as said ocular model and setting a power of accommodation of said ocular optical system model to the object point corresponding to each pixel of said original image or said distorted original image in accordance to the distance to the object point calculated in said original image creating step and the power of the spectacle lens at the spectacle lens passing position of the principal ray traced in said distorted original image creating step to derive the spectacle lens performance index in the combined optical system of said spectacle lens and the ocular optical system model turned according to the ocular rotational direction to said object point; and

an imaging step of creating a performance index distribution image by giving a monochromatic luminosity or a set of RGB primary color luminosity determined in correspondence to the value of the performance index of said spectacle lens to each corresponding pixel of said original image or said distorted original image and of combining it with the spectacle frame mark image created in said spectacle frame position obtaining step.

5. A method according to anyone of claims 1 through 4, wherein a residual average power error in seeing each object point is defined as said performance index.

6. A method according to anyone of claims 1 through 4, wherein a residual astigmatism in seeing each object point is defined as said performance index.

7. A method according to anyone of claims 1 through 4, wherein a deformation index indicating the degree of deformation in seeing each object point is defined as said performance index.

8. A method according to claim 7, wherein there are steps of deriving a shape of a small circle centered at the object point viewed through the spectacle lens, approximating it to an ellipse, and of defining a scale factor or the ratio of major and minor axes of said approximate ellipse as the deformation index.

9. A method according to anyone of claims 1 through 4, wherein a clearness index indicating the degree of blur in seeing each object point is defined as said performance index.

10. A method according to claim 9, wherein there is a step of deriving a point spread function (PSF) on a retina in seeing each object point, deriving an approximate ellipse, which indicates the spreading range of a point spread function (PSF), and of defining a half of diagonal length of a circumscribed rectangle of said approximate ellipse as the clearness index.

11. A method according to anyone of claims 1 to 10, wherein there are steps of creating and placing virtual objects created by computer graphics within a virtual 3-D space, creating a story of changes of the position of said eye, the direction of central sight line, the lens system passing point, the deformation of virtual objects and the displacement of virtual objects in a time-series manner, creating a spectacle lens performance index distribution image at each point of time in accordance to that story and editing each spectacle lens performance index distribution image to create and display a video image of the spectacle lens performance index distribution image.

12. An apparatus for indicating the performance of a spectacle lens in observing the outside world through the spectacle lens, which comprises:

original image creating means for creating and placing virtual objects made by computer graphics in a virtual 3-D space, and for creating an image of specific angle range of visual field in which the virtual objects are observed by an eye having its center of rotation (O) at a specific position and having a specific direction of a central sight line as an original image, and for calculating objective distances that are distances from all object points each corresponding to a pixel of said original image to the center of rotation (O) of the eye;

distorted original image creating means for tracing the center principal ray, which is a principal ray emitted from the object point at the center of visual field and passing through a specific position of the spectacle lens (L), and the center ocular rotational direction which is the ocular rotational direction thereof by ray tracing, wherein a ray emitted from an object point, passing through a certain position of the spectacle lens (L), and heading toward the center of rotation (O) is defined as a principal ray and the exit direction of the principal ray from the rear surface of the spectacle lens (L) is defined as the ocular rotational direction, and for deriving positions of all object points each corresponding to a pixel of said original image in an after-lens visual field having its central axis to be the said central ocular rotational direction, as the ocular rotational direction to each object point by said ray tracing and for creating a distorted original image which is an image containing distortion to each of said object point, and for calculating the spectacle lens passing position of the principal ray to each of said object point;

spectacle frame position obtaining means for creating a spectacle frame mark image indicating the position of the spectacle frame on said original image or a distorted original image by using the data of spectacle lens passing position of the principal ray calculated with the creation of the distorted original image;

performance index deriving means for introducing an accommodation dependent ocular optical system model as an ocular model and for setting a power of accommodation of said ocular optical system model to the object point corresponding to each pixel of said original image or said distorted original image in accordance to the distance to the object point calculated by said original image creation and the power of the spectacle lens (L) at the spectacle lens passing position of the principal ray traced by said distorted original image creation to derive the spectacle lens performance index in the combined optical system of said spectacle lens (L) and the ocular optical system model turned according to the ocular rotational direction to said object point; and

imaging means for creating a performance index distribution image by giving a monochromatic luminosity or a set of RGB primary color luminosity determined in correspondence to the value of the performance index of said spectacle lens (L) to each corresponding pixel of said original image or said distorted original image and for combining it with the spectacle frame mark image created by said spectacle frame position obtaining means.

13. An apparatus according to claim 12, wherein said means for creating and placing virtual objects created by computer graphics within a virtual 3-D space are formed for creating a story of changes of the position of an eye, the direction of central sight line, the lens system passing point, the deformation of virtual objects and the displacement of virtual objects in a time-series manner, and for creating a spectacle lens performance index distribution image at each point of time in accordance to that story and for editing each spectacle lens performance index distribution image so as to create and display a video image of the spectacle lens performance index distribution image.

**Patentansprüche**

1. Verfahren zum Anzeigen einer Brillenglaslinsen-Leistung, wobei

   - ein Leistungsindex definiert und berechnet wird, der die Leistung der Brillenglaslinse in bezug auf alle Objektpunkt innerhalb eines Blickfelds anzeigt, wenn die Außenwelt durch die Brillenglaslinse beobachtet wird, und
   - eine Skala des Leistungsindex in einem visuell verständlichen Modus angezeigt wird.

2. Verfahren nach Anspruch 1, wobei das Verfahren folgende Schritte aufweist:

   Definieren und Ableiten eines Leistungsindex, der die Leistung der Brillenglaslinse in bezug auf alle Objektpunkte innerhalb eines Blickfelds anzeigt, wenn die Außenwelt durch die Brillenglaslinse beobachtet wird, und Erzeugen und Anzeigen eines Leistungsindex-Verteilungsbilds, indem eine monochromatische Helligkeit oder ein Satz einer RGB-Grundfarbenhelligkeit, die entsprechend dem Wert des Leistungsindex des Objektpunkts in dem Blickfeld bestimmt wird, einem jeweiligen entsprechenden Pixel eines ursprünglichen Bildes oder eines verzerrten ursprünglichen Bildes verliehen wird, wobei es sich dabei um ein Blickfeld handelt, das durch die Brillenglaslinse gesehen wird.

3. Verfahren nach Anspruch 1 oder 2, wobei der Schritt des Erzeugens des Leistungsindex-Verteilungsbildes folgende Schritte aufweist:

einen Originalbild-Erzeugungsschritt zum Erzeugen eines Bildes innerhalb eines spezifischen Bereichs des Blickfeldes, der durch ein Auge mit einem speziellen Drehpunkt betrachtet wird, als ein Originalbild, und zum Berechnen von Abständen von allen jeweils einem Pixel entsprechenden Objektpunkten zu dem Drehpunkt;

einen Erzeugungsschritt eines verzerrten Originalbildes zum Ableiten einer Verzerrung des Blickfeldes, wenn dasselbe durch die Brillenglaslinse betrachtet wird, indem ein Strahlverfolgungsverfahren verwendet wird, um ein verzerrtes Originalbild zu erzeugen, bei dem es sich um ein Bild handelt, das diese Verzerrung enthält, und zum Berechnen der Brillenglaslinsen-Paßposition des Strahls, der von dem Objektpunkt, der jeweils einem Pixel des Originalbildes oder des verzerrten Originalbildes entspricht, emittiert wird;

einen Brillenglasrahmenpositions-Erhaltungsschritt zum Erzeugen eines Brillenglasrahmenmarkierungs-Bildes, das die Positon des Brillenglasrahmens auf dem Originalbild oder dem verzerrten Originalbild anzeigt, durch Verwendung der Daten der Brillenglaslinsen-Paßposition des Strahls von dem Objektpunkt, der in dem Erzeugungsschritt des verzerrten Originalbilds berechnet wird;

einen Leistungsindex-Ableitungsschritt zum Ableiten des Leistungsindex in bezug auf alle Objektpunkte, die jeweils einem Pixel des Originalbildes oder des verzerrten Originalbilds in einem optischen System entsprechen, das die Brillenglaslinse und das Okularmodell aufweist; und

ein Abbildungsschritt zum Erzeugen eines Leistungsindexverteilungs-Bildes, indem eine monochromatische Helligkeit oder ein Satz einer RGB-Grundfarbenhelligkeit, die entsprechend dem Wert des Leistungsindex bestimmt wird, der in dem Leistungsindex-Ableitungsschritt abgeleitet wird, einem jeden entsprechenden Pixel des Originalbildes oder dem verzerrten Originalbilds verliehen wird, und zum Kombinieren desselben mit dem Billenglasrahmenmarkierungs-Bild, das in dem Brillenglasrahmenpositions-Erhaltungsschritt erzeugt wird.

4.  Verfahren nach einem der Ansprüche 1 bis 3, wobei der Schritt des Erzeugens des Leistungsindexverteilungsbildes folgende Schritte aufweist:

einen Schritt zum Erzeugen eines Originalbildes zum Erzeugen und Plazieren von virtuellen Objekten, die durch Computergraphik in einem virtuellen 3-D-Raum erstellt werden, zum Plazieren eines Drehpunkts an einer spezifischen Position innerhalb des virtuellen 3-D-Raums, um ein Bild dieser virtuellen Objekte innerhalb eines Blickfeldes zu erzeugen, bei dem es sich um einen Bereich innerhalb einer spezifischen Pyramide handelt, deren Apex an dem Drehpunkt positioniert ist und

deren zentrale Achse entlang einer spezifischen Richtung einer Visierlinienrichtung verläuft, als ein

Originalbild, und zum Messen von Objektivabständen, bei denen es sich um Abstände von allen Objektpunkten, die jeweils einem Pixel des Originalbildes entsprechen, zu dem Drehpunkt handelt;

einen Schritt zum Erzeugen eines verzerrten Originalbildes zum Verfolgen des zentralen Hauptstrahls, bei dem es sich um einen Hauptstrahl handelt, der von dem Objektpunkt an der Mitte des Blickfeldes emittiert wird und durch eine spezifische Position der Brillenglaslinse gelangt, und der zentralen Okulardrehrichtung, bei der es sich um deren Okulardrehrichtung handelt, durch ein Strahlverfolgungsverfahren, wobei ein Strahl, der von einem Objektpunkt emittiert wird, der durch eine bestimmte Position der Brillenglaslinse gelangt und sich in Richtung des Drehpunkts bewegt, als ein Hauptstrahl definiert ist, und wobei die Austrittsrichtung des Hauptstrahls von der hinteren Oberfläche der Brillenglaslinse als die Okulardrehrichtung definiert ist; zum Ableiten von Positionen von allen Objektpunkten, die jeweils einem Pixel des Originalbildes in dem Nach-Linse-Blickfeld entsprechen, dessen zentrale Achse die zentrale Okulardrehrichtung sein soll, als die Okulardrehrichtung zu jedem Objektpunkt durch das Strahlverfolgungsverfahren; zum Erzeugen eines verzerrten Originalbildes, bei dem es sich um ein Bild in dem Nach-Linse-Blickfeld handelt, d. h. ein eine Verzerrung enthaltendes Bild in bezug auf jeden Objektpunkt; zum Berechnen der Brillenglaslinsen-Paßposition des Hauptstrahls in bezug auf jeden Objektpunkt;

einen Schritt zum Erhalten einer Brillenglasrahmenposition zum Erzeugen eines Brillenglasrahmenmarkierungs-Bildes, das die Position des Brillenglasrahmens auf dem Originalbild oder dem verzerrten Originalbild anzeigt, durch Verwenden der Daten der Brillenglaslinsen-Paßposition des Hauptstrahls, der in dem Schritt zum Erzeugen des verzerrten Originalbildes verfolgt wird;

einen Leistungsindexableitungsschritt zum Einführen eines akkommodationsabhängigen optischen Okularsystems als das Okularmodell und zum Einstellen einer Akkommodationskraft des optischen Okularsystemmodells in bezug auf den Objektpunkt, der jedem Pixel des Originalbildes oder des verzerrten Originalbildes gemäß dem Abstand zum Objektpunkt entspricht, der in dem Schritt zum Erzeugen des Originalbildes berechnet wird, und der Kraft der Brillenglaslinse an der Brillenglaslinsen-Paßposition des Hauptstrahls, der in dem Schritt zum Erzeugen verzerrten Originalbildes verfolgt wird, um den Brillenglaslinsen-Leistungsindex in dem kombinierten optischen System der Brillenglaslinse und des optischen Okularsystems abzuleiten, der gemäß der Okulardrehrichtung in bezug auf den Objektpunkt gedreht wird; und

einen Abbildungsschritt zum Erzeugen eines Leistungsindexverteilungs-Bildes, indem eine monochromatische Helligkeit oder ein Satz einer RGB-Grundfarbenhelligkeit, die entsprechend dem Wert des Leistungsindex der Brillenglaslinse bestimmt wird, einem jeden entsprechenden Pixel des Originalbildes oder des verzerrten Originalbildes verliehen wird, und zum Kombinieren desselben mit dem Brillenglasrahmenmarkierungs-Bild in dem Schritt zum Erhalten einer Brillenglasrahmenposition.

5. Verfahren gemäß einem beliebigen der Ansprüche 1 bis 4, wobei ein verbleibender Durchschnittskraftfehler beim Sehen eines jeweiligen Objektpunkts als der Leistungsindex definiert wird.

6. Verfahren nach einem beliebigen der Ansprüche 1 bis 4, wobei ein verbleibender Astigmatismus beim Sehen eines jeweiligen Objektpunktes als der Leistungsindex definiert wird.

7. Verfahren nach einem beliebigen der Ansprüche 1 bis 4, wobei ein Deformationsindex, der den Grad der Deformation beim Sehen eines jeweiligen Objektpunkts anzeigt, als der Leistungsindex definiert wird.

8. Verfahren nach Anspruch 7, wobei Schritte zum Ableiten einer Form eines kleinen Kreises, der an dem Objektpunkt durch die Brillenglaslinse betrachtet zentriert ist, zum Annähern derselben an eine Ellipse und zum Definieren eines Skalenfaktors oder des Verhältnisses der Haupt- und Nebenachsen der angenäherten Ellipse als der Deformationsindex vorliegen.

9. Verfahren nach einem beliebigen der Ansprüche 1 bis 4, wobei ein Klarheitsindex, der den Grad der Unschärfe beim Sehen eines jeden Objektpunkts anzeigt, als der Leistungsindex definiert wird.

10. Verfahren nach Anspruch 9, wobei ein Schritt zum Ableiten einer Punktverteilungsfunktion (PSF) auf einer Netzhaut beim Sehen eines jeden Objektpunkts, zum Ableiten einer angenäherten Ellipse, die den Verteilungsbereich einer Punktverteilungsfunktion (PSF) anzeigt, und zum Definieren einer Hälfte einer diagonalen Länge eines umschriebenen Rechtecks der angenäherten Ellipse als der Klarheitsindex vorgesehen sind.

11. Verfahren nach einem der Ansprüche 1 bis 10, wobei Schritte zum Erzeugen und Plazieren von virtuellen Objekten, die durch Computergraphik innerhalb eines virtuellen 3-D-Raums erstellt werden, zum Erzeugen einer Geschichte von Veränderungen der Position des Auges, der Richtung der zentralen Visierlinie, des Linsensystempaßpunktes, der Deformation von virtuellen Objekten und der Verschiebung von virtuellen Objekten in der Weise einer zeitlichen Aufeinanderfolge, zum Erzeugen eines Brillenglaslinsen-Leistungsindex-Verteilungsbildes zu einem jeweiligen Zeitpunkt gemäß dieser Geschichte und zum Überarbeiten eines jeweiligen Brillenglaslinsen-Leistungsindex-Verteilungsbildes vorliegen, um ein Videobild des Brillenglaslinsen-Leistungsindexverteilungsbildes zu erzeugen und anzuzeigen.

12. Vorrichtung zum Anzeigen der Leistung einer Brillenglaslinse beim Beobachten der Außenwelt durch die Brillenglaslinse, die folgende Merkmale aufweist:

Originalbild-Erzeugungseinrichtung zum Erzeugen und Plazieren von virtuellen Objekten, die durch Computergraphik in einem virtuellen 3-D-Raum erstellt werden, und zum Erzeugen eines Bildes eines spezifischen Winkelbereichs des Blickfeldes, in dem die virtuellen Objekte durch ein Auge beobachtet werden, das seinen Drehpunkt (O) an einer spezifischen Position aufweist und eine spezifische Richtung einer zentralen Visierlinie aufweist, als ein Originalbild, und zum Berechnen von Objektivabständen, bei denen es sich um Abstände von allen Objektpunkten, die jeweils einem Pixel des Originalbildes entsprechen, zum Drehpunkt (O) des Auges handelt;

Einrichtung zum Erzeugen eines verzerrten Originalbildes zum Verfolgen des mittleren Hauptstrahls, bei dem es sich um einen Hauptstrahl handelt, der von dem Objektpunkt an der Mitte des Blickfeldes emittiert wird und durch eine spezifische Position der Brillenglaslinse (L) gelangt, und der mittleren Okulardrehrichtung, bei der es sich um deren Okulardrehrichtung handelt, durch Strahlverfolgung, wobei ein von einem Objektpunkt emittierter Strahl, der durch eine bestimmte Position der Brillenglaslinse (L) gelangt und sich zum Drehpunkt (O) hinbewegt, als ein Hauptstrahl definiert wird und die Austrittsrichtung des Hauptstrahls von der hinteren Oberfläche der Brillenglaslinse (L) als die Okulardrehrichung definiert ist, und zum Ableiten von Positionen aller Objektpunkte, die jeweils einem Pixel des Originalbildes in einem Nach-Linse-Blickfeld entsprechen, dessen zentrale Achse die zentrale Okulardrehrichtung sein soll, als die Okulardrehrichtung in bezug auf jeden Objektpunkt durch die Strahlverfolgung und zum Erzeugen eines verzerrten Originalbildes, bei dem es sich um ein eine Verzerrung enthaltendes Bild in bezug auf jeden Objektpunkt handelt, und zum Berechnen der Brillenglaslinsen-Paßposition des Hauptstrahls in bezug auf jeden Objektpunkt;

eine Einrichtung zum Erhalten einer Brillenglasrahmenposition zum Erzeugen eines Brillenglasrahmemarkierungs-Bildes, das die Position des Brillenglasrahmens auf dem Originalbild oder einem verzerrten Originalbild anzeigt, durch Verwenden der Daten der Brillenglaslinsen-Paßposition des Hauptstrahls, der mit der Erzeugung des verzerrten Originalbildes berechnet wird;

eine Einrichtung zum Ableiten eines Leistungsindex zum Einführen eines akkommodationsabhängigen optischen Okularsystemmodells als ein Okularmodell und zum Einstellen einer Akkommodationskraft des optischen Okularsystemmodells in bezug auf den Objektpunkt, der einem jeweiligen Pixel des Originalbildes oder des verzerrten Originalbildes gemäß dem Abstand zum Objektpunkt entspricht, der durch die Erzeugung eines Originalbildes und die Kraft der Brillenglaslinse (L) an der Brillenglaslinsen-Paßposition des Hauptstrahls berechnet wird, der durch die Erzeugung des verzerrten Originalbildes verfolgt wird, um den Brillenglaslinsen-Leistungsindex in dem kombinierten optischen System der Brillenglaslinse (L) und des optischen Okularsystemmodells abzuleiten, das gemäß der Okulardrehrichtung in bezug auf den Objektpunkt gedreht wird; und

Abbildungseinrichtung zum Erzeugen eines Leistungsindex-Verteilungsbildes, indem eine monochromatische Helligkeit oder ein Satzes einer RGB-Grundfarbenhelligkeit, die entsprechend dem Wert des Leistungsindex der Brillenglaslinse (L) bestimmt wird, einem jeweiligen entsprechenden Pixel des Originalbildes oder des verzerrten Originalbildes verliehen wird, und zum Kombinieren desselben mit dem Brillenglasrahmenmarkierungs-Bild, das durch die Einrichtung zum Erhalten einer Brillenglasrahmenposition erzeugt wird.

**13.** Vorrichtung nach Anspruch 12, wobei die Einrichtung zum Erzeugen und Plazieren von virtuellen Objekten, die durch Computergraphik innerhalb eines virtuellen 3-D-Raums erzeugt werden, zum Erzeugen einer Geschichte von Veränderungen der Position eines Auges, der Richtung der zentralen Visierlinie, des Linsensystem-Paßpunkts, der Deformation von virtuellen Objekten und der Verschiebung von virtuellen Objekten in einer Weise einer zeitlichen Aufeinanderfolge, und zum Erzeugen eines Brillenglaslinsen-Leistungsindexverteilungsbildes zu jedem Zeitpunkt gemäß dieser Geschichte und zum Überarbeiten eines jeden Brillenglaslinsen-Leistungsindexverteilungsbildes, um ein Videobild des Brillenglaslinsen-Leistungsindexverteilungsbildes zu erzeugen und anzuzeigen, ausgebildet ist.

## Revendications

**1.** Procédé pour indiquer la performance d'un verre de lunettes, dans lequel

- un indice de performance est défini et calculé, servant à indiquer la performance d'un verre de lunettes pour tous les points objets à l'intérieur d'un champ visuel lorsque le monde extérieur est observé à travers le verre de lunettes, et
- une échelle de l'indice de performance est présentée dans un mode visuellement compréhensible.

**2.** Procédé selon la revendication 1, avec les étapes de :

définition et de dérivation d'un indice de performance servant à indiquer la performance d'un verre de lunettes pour tous les points objets à l'intérieur d'un champ visuel lorsque le monde extérieur est observé à travers le verre de lunettes, et de création et de présentation d'une image de répartition d'indice de performance en donnant une luminosité monochromatique ou un jeu de luminosité de couleurs primaires RVB qui est déterminée par correspondance avec la valeur de l'indice de performance du point objet dans le champ visuel, pour chaque pixel correspondant d'une image originale ou d'une image originale déformée qui est une image d'un champ visuel vu à travers ledit verre de lunettes.

**3.** Procédé selon les revendications 1 ou 2, dans lequel l'étape de création de ladite image de répartition d'indice de performance comprend :

- une étape de création d'image originale servant à créer une image à l'intérieur d'un domaine spécifique de champ visuel qui est observé par un oeil ayant un centre de rotation spécifique comme une image originale, et à calculer la distance à partir de tous les points objets correspondant chacun à un pixel jusqu'au dit centre de rotation ;
- une étape de création d'image originale déformée servant à dériver la déformation du champ visuel lorsqu'il est vu à travers ledit verre de lunettes en utilisant un procédé de traçage de rayon pour créer une image originale déformée qui est une image contenant cette déformation, et à calculer la position de passage dans le verre de lunettes du rayon émis à partir du point objet correspondant à chaque pixel de l'image originale ou de l'image originale déformée ;
- une étape d'obtention de position de monture de lunettes servant à créer une image de repère de monture de lunettes indiquant la position de la monture de lunettes sur ladite image originale ou ladite image originale déformée en utilisant les données de la position de passage dans le verre de lunettes du rayon provenant du point objet calculée dans ladite étape de création d'image originale déformée ;
- une étape de dérivation d'indice de performance servant à dériver l'indice de performance pour tous les points objets correspondant chacun à un pixel de ladite image originale ou de ladite image originale déformée dans un système optique comprenant ledit verre de lunettes et ledit modèle oculaire ; et
- une étape d'imagerie servant à créer une image de répartition d'indice de performance en donnant une luminosité monochromatique ou un jeu de luminosité de couleurs primaires RVB déterminée par correspondance avec la valeur de l'indice de performance dérivé dans ladite étape de dérivation d'indice de performance pour chaque pixel correspondant de ladite image originale ou de ladite image originale déformée, et à la combiner avec l'image de repère de monture de lunettes créée dans ladite étape d'obtention de position de monture de lunettes.

**4.** Procédé selon l'une quelconque des revendications 1 à 3, dans lequel l'étape de création de ladite image de répartition d'indice de performance comprend :

- une étape de création d'image originale servant à créer et à placer des objets virtuels faits par informatique graphique dans un espace virtuel 3D, à placer un centre de rotation au niveau d'une position spécifique dans l'espace virtuel 3D afin de créer une image de ces objets virtuels dans un champ visuel qui est un domaine à l'intérieur d'une pyramide spécifique, dont le sommet est localisé au niveau dudit centre de rotation et dont l'axe central est le long d'une direction spécifique de la ligne de visée, en tant qu'image originale, et à mesurer des distances objectives qui sont des distances à partir de tous les points objets correspondant chacun à un pixel de ladite image originale jusqu'au dit centre de rotation ;
- une étape de création d'image originale déformée servant à tracer le rayon principal central, qui est un rayon principal émis à partir du point objet au niveau du centre du champ visuel et passant à travers une position spécifique du verre de lunettes, et la direction de rotation oculaire centrale qui est à direction de rotation oculaire correspondante à l'aide d'un procédé de traçage de rayon, dans laquelle un rayon émis à partir d'un point objet, passant à travers une certaine position du verre de lunettes et se dirigeant vers le centre de rotation est défini en tant que rayon principal, et la direction de sortie du rayon principal provenant de la surface arrière du verre de lunettes est définie en tant que direction de rotation oculaire ; à dériver les positions de tous les points objets correspondant chacun à un pixel de ladite image originale dans le champ visuel post-verre ayant son axe central étant ladite direction de rotation oculaire centrale, en tant que direction de rotation oculaire pour chaque point objet à l'aide du procédé de traçage de rayon ; à créer une image originale déformée qui est une image dans le champ visuel post-verre, c'est-à-dire une image contenant la déformation pour chaque dit point objet ; de calculer la position de passage dans le verre de lunettes du rayon principal pour chaque dit point objet ;
- une étape d'obtention de position de monture de lunettes servant à créer une image de repère de monture de lunettes indiquant la position de la monture de lunettes sur ladite image originale ou sur ladite image originale déformée en utilisant les données de position de passage dans le verre de lunettes du rayon principal calculé dans ladite étape de création d'image originale déformée ;
- une étape de dérivation d'indice de performance consistant à introduire un modèle de système optique oculaire dépendant de l'accommodation en tant que dit modèle oculaire, et à établir une puissance d'accommodation dudit modèle de système optique oculaire pour le point objet correspondant à chaque pixel de ladite image originale ou de ladite image originale déformée en fonction de la distance jusqu'au point objet calculée dans ladite étape de création d'image originale et de la puissance du verre de lunettes au niveau de la position de passage dans le verre de lunettes du rayon principal tracée dans ladite étape de création d'image originale déformée afin de dériver l'indice de performance du verre de lunettes dans le système optique combiné dudit verre de lunettes et du modèle de système optique oculaire tourné en fonction de la direction de rotation oculaire pour ledit point objet ; et

- une étape d'imagerie servant à créer une image de répartition d'indice de performance en donnant une luminosité monochromatique ou un jeu de luminosité de couleurs primaires RVB déterminée par correspondance avec la valeur de l'indice de performance dudit verre de lunettes pour chaque pixel correspondant de ladite image originale ou de ladite image originale déformée, et à la combiner avec l'image de repère de monture de lunettes créée dans ladite étape d'obtention de position de monture de lunettes.

5. Procédé selon l'une quelconque des revendications 1 à 4, dans lequel une erreur de puissance moyenne résiduelle en regardant chaque point objet est définie en tant que dit indice de performance.

6. Procédé selon l'une quelconque des revendications 1 à 4, dans lequel un astigmatisme résiduel en regardant chaque point objet est défini en tant que dit indice de performance.

7. Procédé selon l'une quelconque des revendications 1 à 4, dans lequel un indice de déformation indiquant le degré de déformation en regardant chaque point objet est défini en tant que dit indice de performance.

8. Procédé selon la revendication 7, dans lequel se trouvent les étapes de dérivation d'une forme d'un petit cercle centré au niveau du point objet vu à travers le verre de lunettes, d'approximation de celle-ci comme ellipse, et de définition d'une échelle ou bien du rapport grand axe petit axe de ladite ellipse approchée en tant qu'indice de déformation.

9. Procédé selon l'une quelconque des revendications 1 à 4, dans lequel un indice de netteté indiquant le degré de flou dans la vue de chaque point objet est défini en tant que dit indice de performance.

10. Procédé selon la revendication 9, dans lequel se trouvent les étapes de dérivation d'une fonction d'étalement du point (fonction "PSF") sur une rétine dans la vue de chaque point objet, de dérivation d'une ellipse approximative, qui indique la portée d'étalement d'une fonction d'étalement du point (fonction "PSF"), et de définition d'une demi longueur de diagonale d'un rectangle circonscrit de ladite ellipse approximative en tant qu'indice de netteté.

11. Procédé selon l'une quelconque des revendications 1 à 10, dans lequel il y a des étapes de création et de placement d'objets virtuels créés par informatique graphique dans un espace virtuel 3D, de création d'un historique des changements de la position de l'oeil, de la direction de la ligne de visée centrale, du point de passage dans le système de verre, de la déformation des objets virtuels et du déplacement des objets virtuels à la manière d'une série chronologique, de création d'une image de répartition d'indice de performance de verre de lunettes au niveau de chaque point chronologique en fonction de cet historique et en éditant chaque image de répartition d'indice de performance de verre de lunettes afin de créer et de présenter une image vidéo de l'image de répartition d'indice de performance de verre de lunettes.

12. Appareil destiné à indiquer la performance d'un verre de lunettes en observant le monde extérieur à travers le verre de lunettes, comprenant :

- un moyen de création d'une image originale pour créer et placer des objets virtuels faits par informatique graphique dans un espace virtuel 3D, et pour créer une image d'un domaine angulaire spécifique du champ visuel dans lequel les objets virtuels sont observés par un oeil ayant son centre de rotation (O) au niveau d'une position spécifique et ayant une direction spécifique de ligne de visée centrale en tant qu'image originale, et pour calculer des distances objectives qui sont des distances à partir de tous les points objets correspondant chacun à un pixel de ladite image originale jusqu'au centre de rotation (O) de l'oeil ;
- un moyen de création d'une image originale déformée pour tracer le rayon principal central, qui est un rayon principal émis à partir du point objet au niveau du centre de champ visuel et passant à travers une position spécifique du verre de lunettes (L), et la direction de rotation oculaire centrale qui est sa direction de rotation oculaire par traçage de rayon, dans lequel un rayon émis à partir d'un point objet, passant à travers une certaine position du verre de lunettes (L), et se dirigeant vers le centre de rotation (O), est défini en tant que rayon principal, et la direction de sortie du rayon principal provenant de la surface arrière du verre de lunettes (L) est définie en tant que direction de rotation oculaire, et pour dériver les positions de tous les points objets correspondant chacun à un pixel de ladite image originale dans un champ visuel post-verre ayant son axe central étant ladite direction de rotation oculaire centrale, en tant que direction de rotation oculaire pour chaque point objet par traçage de rayon, et pour créer une image originale déformée qui est une image contenant la déformation pour chaque dit point objet, et pour dériver la position de passage dans le verre de lunettes du rayon principal vers chaque dit point objet ;

- un moyen d'obtention de la position de la monture de lunettes pour créer une image de repère de monture de lunettes indiquant la position de la monture de lunettes sur ladite image originale ou sur ladite image originale déformée en utilisant les données de position de passage dans le verre de lunettes du rayon principal calculé par ledit moyen de création d'image originale déformée ;

- un moyen de dérivation d'indice de performance pour introduire un modèle de système optique oculaire dépendant de l'accommodation en tant que modèle oculaire et pour établir une puissance d'accommodation dudit modèle de système optique oculaire pour le point objet correspondant à chaque pixel de ladite image originale ou de ladite image originale déformée en fonction de la distance au point objet calculée par ledit moyen de création d'image originale et la puissance du verre de lunettes (L) au niveau de la position de passage dans le verre de lunettes du rayon principal tracée à l'aide dudit moyen de création d'image originale déformée de façon à dériver l'indice de performance du verre de lunettes dans le système optique combiné dudit verre de lunettes (L) et du modèle de système optique oculaire tourné en fonction de la direction de rotation oculaire pour ledit point objet ; et

- un moyen d'imagerie pour créer une image de répartition d'indice de performance en donnant une luminosité monochromatique ou un jeu de luminosité de couleurs primaires RVB déterminée par correspondance avec la valeur de l'indice de performance dudit verre de lunettes (L) pour chaque pixel correspondant de ladite image originale ou de ladite image originale déformée et pour la combiner avec l'image de repère de la monture de lunettes créée à l'aide dudit moyen d'obtention de position de monture de lunettes.

13. Appareil selon la revendication 12, dans lequel lesdits moyens de créer et de placer des objets virtuels créés par informatique graphique dans un espace virtuel 3D sont formés pour créer un historique des changements de la position de l'oeil, de la direction de la ligne de visée centrale, du point de passage dans le système de verre, de la déformation des objets virtuels et du déplacement des objets virtuels à la manière d'une série chronologique, et pour créer une image de répartition d'indice de performance de verre de lunettes au niveau de chaque point chronologique en fonction de cet historique et pour éditer chaque image de répartition d'indice de performance de verre de lunettes de façon à créer et présenter une image vidéo de l'image de répartition d'indice de performance de verre de lunettes.

FIG. 1

## FIG. 2

PROCESS TO CREATE RESIDUAL APE IMAGE AND RESIDUAL ASTIGMATISM IMAGE

APE: AVERAGE POWER ERROR

PROCESS WITHIN ⌐¯¯⌐ IS DOWN FOR EACH IMAGE PIXEL

## FIG. 3

PROCESS TO CREATE DEFORMATION INDEX IMAGE

PROCESS WITHIN ⌐⌐ IS DOWN FOR EACH IMAGE PIXEL

VERTUAL CG OBJECTS

LENS PARAMETERS

EYE POSITION AND ORIENTATION

MAKE ORIGINAL IMAGE

TRACE NEARBY PRINCIPAL RAYS

$\dfrac{\delta\mu}{\delta\mu'}, \dfrac{\delta\mu}{\delta\nu'}, \dfrac{\delta\nu}{\delta\mu'}, \dfrac{\delta\nu}{\delta\nu'},$

ORIGINAL IMAGE

OBJECT DISTANCE

CALCULATE DEFORMATION INDEX

PASSING POINT OF PRINCIPAL RAY TO CENTRAL PIXEL

MAKE DISTORTED ORIGINAL IMAGE

PRINCIPAL RAY PASSING POINT ON THE LENS

DEFORMATION INDEX

DISTORTED ORIGINAL IMAGE

MAKE DEFORMATION INDEX IMAGE

MAKE FRAME MARK IMAGE

FRAME MARK IMAGE

DEFORMATION INDEX IMAGE

DISTORTED DEFORMATION INDEX IMAGE

EP 1 146 328 B1

# FIG. 4

PROCESS TO CREATE CLEARNESS INDEX IMAGE

PROCESS WITHIN ⬚ IS
DOWN FOR EACH IMAGE PIXEL

VERTUAL
CG OBJECTS

LENS
PARAMETERS

EYE POSITION
AND ORIENTATION

MAKE
ORIGINAL IMAGE

DETERMINE POWER
OF ACCOMMODATION

SCHEMATIC EYE
PARAMETERS

ORIGINAL IMAGE

OBJECT
DISTANCE

CALCULATE
PSF

PASSING POINT OF
PRINCIPAL RAY TO
CENTRAL PIXEL

MAKE DISTORTED
ORIGINAL IMAGE

PRINCIPAL RAY
PASSING POINT
ON THE LENS

CLEARNESS
INDEX

DISTORTED
ORIGINAL IMAGE

MAKE CLEARNESS
INDEX IMAGE

MAKE FRAME
MARK IMAGE

FRAME
MARK IMAGE

CLEARNESS
INDEX IMAGE

DISTORTED
CLEARNESS
INDEX IMAGE

EP 1 146 328 B1

EP 1 146 328 B1

# FIG. 5

$$\tan \beta = \frac{y}{x} \quad , \quad \tan \gamma = \frac{z}{x}$$

EP 1 146 328 B1

# FIG. 6

$$\tan \beta' = \frac{y'}{x'} \ , \ \tan \gamma' = \frac{z'}{x'}$$

FIG. 7

# FIG. 8

### OPTICAL PARAMETERS OF NAVARRO'S EYE MODEL
### (ACCOMMODATION FREE)

| | |
|---|---|
| **RADIUS OF CURVATURE (mm)** | |
| ANTERIOR SURFACE OF CORNEA | 7.72 |
| POSTERIOR SURFACE OF CORNEA | 6.2 |
| ANTERIOR SURFACE OF CRYSTALLINE LENS | 10.2 |
| POSTERIOR SURFACE OF CRYSTALLINE LENS | -6.0 |
| **ASPHERICITY Q** | |
| ANTERIOR SURFACE OF CORNEA | -0.26 |
| ANTERIOR SURFACE OF CRYATALLINE LENS | -3.1316 |
| POSTERIOR SURFACE OF CRYSTALLINE LENS | -1.0 |
| **THICKNESS (mm)** | |
| CORNEA | 0.55 |
| AQUEOUS | 3.05 |
| CRYSTALLINE LENS | 4.0 |
| VITREOUS | 16.4 |
| **REFRACTIVE INDEX** | |
| CORNEA | 1.367 |
| AQUEOUS | 1.3374 |
| CRYSTALLINE LENS | 1.42 |
| VITREOUS | 1.336 |
| **RESULTING REFRACTIVE POWER (DIOPTERS)** | |
| | 60.4 |

## FIG. 9

DEPENDENCE OF LENS PARAMETERS ON ACCOMMODATION A  (IN DIOPTERS)

| LENS PARAMETER | ACCOMMODATION DEPENCE |
|---|---|
| ANTERIOR CRYSTALLINE LENS RADIUS | $R_3(A) = 10.2000 - 1.7500 \ln(A + 1)$ |
| ANTERIOR CRYSYALLINE LENS ASPHERICITY | $Q_3(A) = -3.1316 + 0.3400 \ln(A + 1)$ |
| POSTERIOR CRYSTALLINE LENS RADIUS | $R_4(A) = -6.0000 + 0.2294 \ln(A + 1)$ |
| POSTERIOR CRYSTALLINE LENS ASPHERICITY | $Q_4(A) = -1.0000 - 0.1230 \ln(A + 1)$ |
| AQUEOUS THICKNESS | $D_2(A) = 3.0500 - 0.0500 \ln(A + 1)$ |
| CRYSTALLINE LENS THICKNESS | $D_3(A) = 4.0000 + 0.1000 \ln(A + 1)$ |
| CRYSTALLINE LENS REFRACTIVE INDEX | $n_3(A) = 1.4200 + 9.00 \times 10^{-5}(10.00A + A^2)$ |

EP 1 146 328 B1

*FIG. 10*

## FIG. 11

ENTRANCE PUPIL

B

C

O'

A

Q

O

R

RAY TOWARDS A POINT
ON ENTRANCE PUPIL

P

REAR APEX SPHERE

EP 1 146 328 B1

FIG. 12

FIG. 13

EP 1 146 328 B1

FIG. 14

FIG. 15

FIG. 16

FIG. 17

EP 1 146 328 B1

## FIG. 18

PROCESS TO CREATE MOVIE OF PERFORMANCE INDEX IMAGE

PROCESS WITHIN ⌐ ⌐
IS DOWN FOR EACH TIME

VIRTUAL
CG OBJECTS

MAKE
MOVIE
STORY

EYE POSITION
AND ORIENTATION

MAKE PERFORMANCE
INDEX IMAGE

LENS
PARAMETERS

PASSING POINT OF
PRINCIPAL RAY TO
CENTARAL PIXEL

PERFORMANCE
INDEX IMAGE

DISTORED
PERFORMANCE
INDEX IMAGE

MOVIE OF
PERFORMANCE
INDEX IMAGE

NARRATION AND ETC.

EDIT MOVIE

MOVIE OF DISTORED
PERFORMANCE
INDEX IMAGE

EP 1 146 328 B1

*FIG. 19*